(19) Europäisches Patentamt
European Patent Office
Office européen des brevets

(11) **EP 3 929 762 B1**

(12) **EUROPEAN PATENT SPECIFICATION**

(45) Date of publication and mention
of the grant of the patent:
**19.04.2023 Bulletin 2023/16**

(21) Application number: **20759324.5**

(22) Date of filing: **20.02.2020**

(51) International Patent Classification (IPC):
*G06F 21/64* (2013.01)    *H04L 9/32* (2006.01)
*G06F 16/22* (2019.01)    *G06F 16/27* (2019.01)
*H04L 9/00* (2022.01)

(52) Cooperative Patent Classification (CPC):
**G06F 21/64; G06F 16/22; G06F 16/27;**
**H04L 9/3239; H04L 9/50**

(86) International application number:
**PCT/CN2020/075976**

(87) International publication number:
**WO 2020/169061 (27.08.2020 Gazette 2020/35)**

(54) **METHOD FOR RECORDING DATA BLOCK ON BLOCKCHAIN, AND LEADER ACCOUNTING NODE AND MEDIUM**

VERFAHREN ZUR AUFZEICHNUNG EINES DATENBLOCKS AUF EINER BLOCKCHAIN UND FÜHRUNGSABRECHNUNGSKNOTEN UND MEDIUM

PROCÉDÉ D'ENREGISTREMENT DE BLOC DE DONNÉES SUR UNE CHAÎNE DE BLOCS ET NOEUD DE COMPTABILITÉ DE TÊTE ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2019 CN 201910130823**

(43) Date of publication of application:
**29.12.2021 Bulletin 2021/52**

(73) Proprietor: **Tencent Technology (Shenzhen) Company Limited**
**Shenzhen, Guangdong 518057 (CN)**

(72) Inventors:
• **LI, Maocai**
**Shenzhen, Guangdong 518057, (CN)**
• **LAN, Hu**
**Shenzhen, Guangdong 518057, (CN)**
• **WANG, Zongyou**
**Shenzhen, Guangdong 518057, (CN)**

(74) Representative: **Eisenführ Speiser Patentanwälte Rechtsanwälte PartGmbB Postfach 31 02 60 80102 München (DE)**

(56) References cited:
WO-A1-2018/026727     CN-A- 107 767 478
CN-A- 108 667 632     CN-A- 109 241 772
CN-A- 109 359 973     CN-A- 109 902 091
US-A1- 2017 236 123

• SUKHWANI HARISH ET AL: "Performance Modeling of PBFT Consensus Process for Permissioned Blockchain Network (Hyperledger Fabric)", 2017 IEEE 36TH SYMPOSIUM ON RELIABLE DISTRIBUTED SYSTEMS (SRDS), IEEE, 26 September 2017 (2017-09-26), pages 253-255, XP033230785, DOI: 10.1109/SRDS.2017.36 [retrieved on 2017-10-16]
• Gencer Efe Adem: "ON SCALABILITY OF BLOCKCHAIN TECHNOLOGIES", , 31 August 2017 (2017-08-31), XP055496121, Retrieved from the Internet: URL:https://doi.org/10.7298/X4SQ8XJ1 [retrieved on 2018-07-30]

## Description

This application claims priority to Chinese Patent Application No. 201910130823.9, entitled "METHOD FOR RECORDING DATA BLOCK ON BLOCKCHAIN, AND LEADER ACCOUNTING NODE AND MEDIUM" and filed with the China National Intellectual Property Administration on February 21,2019.

## FIELD

The present disclosure relates to the field of blockchains, and in particular to recording of a data block on a blockchain.

## BACKGROUND

In a blockchain system, an accounting node needs to record transaction information on a blockchain transmits the transaction information to a leader accounting node, the leader accounting node packages the transaction information that needs to be uploaded into blocks, and where each block stores an abstract of a previous block. Through this mechanism, blocks are connected in series to form a blockchain structure to achieve tamper-proof. This is because an abstract of a current block on the blockchain is recorded in a subsequent block, if the block is tampered with, the abstract recorded in the subsequent block cannot match that in the current tampered block.

Document "Performance Modeling of PBFT Consensus Process for Permissioned Blockchain Network (Hyperledger Fabric)", SUKHWANI HARISH ET AL, 2017 IEEE 36TH SYMPOSIUM; ON RELIABLE DISTRIBUTED SYSTEMS (SRDS), IEEE, 26 September 2017 (2017-09-26), pages 253-255, XP033230785, investigates whether the consensus process using Practical Byzantinej Fault Tolerance (PBFT) could be a performance bottleneck for networks with a large number of peers.

## SUMMARY

An objective of the present disclosure is to improve efficiency of recording a data block on a blockchain.

According to an aspect of embodiments of the present disclosure, a method for recording a data block on a blockchain is provided. The blockchain includes multiple blockchain branches, data blocks are recorded on the multiple blockchain branches by the same group of accounting nodes. The method is performed by a leader accounting node in the group of accounting nodes. The method includes:

generating a target data block;

determining, in the multiple blockchain branches, whether there is a blockchain branch having a data block on which consensus is being performed and which is to be uploaded;

in a case that there are blockchain branches each having no data block on which consensus is being performed and which is to be uploaded, selecting, from the blockchain branches each having no data block on which consensus is being performed and which is to be uploaded, a blockchain branch for recording the target data block;

recording an abstract of a previous data block that is recorded on the selected blockchain branch in a block header of the target data block; and

transmitting the target data block to other accounting nodes in the group of accounting nodes for performing consensus, and recording the target data block on the selected blockchain branch.

According to another aspect of the embodiments of the present disclosure, a leader accounting node for blockchain recording is provided. The blockchain includes multiple blockchain branches, data blocks are recorded on the multiple blockchain branches by the same group of accounting nodes, and the leader accounting node is selected from the group of accounting nodes. The leader accounting node includes: a target data block generating module, a determining module, a blockchain branch selecting module, an abstract recording module, and a consensus and uploading module. The target data block generating module is configured to generate a target data block. The determining module is configured to determine, in the multiple blockchain branches, whether there is a blockchain branch having at least one data block on which consensus is being performed and which is to be uploaded. The blockchain branch selecting module is configured to, in a case that there are blockchain branches each having no data block on which consensus is being performed and which is to be uploaded, select, from the blockchain branches each having no data block on which consensus is being performed and which is to be uploaded, a blockchain branch for recording the target data block. The abstract recording module is configured to record an abstract of a previous data block that is recorded on the selected blockchain branch in a block header of the target data block. The consensus and uploading module is configured to transmit the target data block to other accounting nodes in the group of accounting nodes for performing consensus, and record the target data block on the selected blockchain branch.

According to an aspect of the embodiments of the present disclosure, a leader accounting node is provided, which includes: a memory and a processor. The memory is configured to store computer-readable instructions, and the processor is configured to read the computer-readable instructions stored in the memory, to perform the method according to the above aspect.

According to an aspect of the embodiments of the present disclosure, a computer program medium is provided, on which computer-readable instructions are stored. The computer-readable instructions, when executed by a processor of a computer, cause the computer to perform the method according to the above aspect.

In the embodiments of the present disclosure, a blockchain includes multiple blockchain branches, and data blocks are recorded on the blockchain branches by the same group of accounting nodes. In this way, in order to upload a target data block onto the blockchain, the target data block may be uploaded onto a blockchain branch having no data block on which consensus is being performed and which is to be uploaded. When an abstract of a previous data block is recorded in a block header, not the abstract of a previous data block on the entire blockchain, but the abstract of the previously recorded data block (on which consensus is completed, and it is unnecessary to wait) on the selected blockchain branch is recorded in the block header of the target data block. In the conventional technology, an abstract of a previous data block can be obtained only after consensus on the previous data block on the entire blockchain is completed, and then the abstract is recorded in the block header of the target data block, and if the consensus on the previous data block is not completed, waiting is required. However, in the above way of the present disclosure, low efficiency in the conventional technology can be avoided. In the manner of multiple blockchain branches, block uploading processes may be performed in parallel to a certain extent, thereby improving the efficiency of uploading of a system. Since multiple blockchain branches are accounted by the same group of accounting nodes, it is ensured that the blockchain branches are maintained in the same process. Each accounting node has all historical information of data recorded by the group of accounting nodes, thereby avoiding disadvantages of incomplete data information due to recording on different blockchains.

Other features and advantages of the present disclosure become apparent through the following detailed descriptions, or partly learned through practice of the present disclosure.

The present invention is defined by the appended independent claims. Dependent claims constitute embodiments of the invention.

## BRIEF DESCRIPTION OF THE DRAWINGS

The above and other objectives, features, and advantages of the present disclosure will become more apparent from the detailed description of exemplary embodiments of the present disclosure made with reference to the drawings.

FIG. 1A to FIG. 1C are diagrams each showing a system architecture of a method for recording a data block on a blockchain according to an embodiment of the present disclosure.

FIG. 2A to FIG. 2E are diagrams each showing an interface generated in a process of performing a method for recording a data block on a blockchain in an application scenario in which an electronic invoice is uploaded onto a blockchain.

FIG. 3A is a schematic diagram of a single blockchain structure for recording a data block in the conventional technology; and FIG. 3B is a schematic diagram of a multi-blockchain branch structure for recording a data block according to an embodiment of the present disclosure.

FIG. 4A is a schematic diagram of a data block structure of a blockchain in the conventional technology; and FIG. 4B is a schematic diagram of a data structure of a block header according to an embodiment of the present disclosure.

FIG. 5A shows a link relationship between an input and an output of transaction information in a data block structure in the conventional technology; and FIG. 5B shows a link relationship between an input and an output of transaction information in a data block structure according to an embodiment of the present disclosure.

FIG. 6 is a time-sequence diagram showing a time sequence for recording data blocks on a blockchain according to an embodiment of the present disclosure.

FIG. 7 is a schematic diagram showing a process of recording a data block in a multi-blockchain branch structure according to an embodiment of the present disclosure.

FIG. 8 is a schematic diagram showing multiple blockchain branches arranged in a multi-dimensional matrix.

FIG. 9 is a flowchart of a method for recording a data block on a blockchain according to an embodiment of the present disclosure.

FIG. 10 is a flowchart of step 430 according to an embodiment of the present disclosure.

FIG. 11 is a flowchart of step 4303 according to an embodiment of the present disclosure.

FIG. 12 is a flowchart of step 450 according to an embodiment of the present disclosure.

FIG. 13 is a flowchart of a process for generating a verification result for a target data block by other accounting nodes according to an embodiment of the present disclosure.

FIG. 14 shows a flowchart of a process for determining a leader accounting node according to an embodiment of the present disclosure.

FIG. 15 is a diagram showing modules of a leader accounting node according to an embodiment of the present disclosure.

FIG. 16 is a diagram showing hardware of a leader accounting node according to an embodiment of the present disclosure.

## DESCRIPTION OF EMBODIMENTS

The exemplary embodiments are described comprehensively with reference to the drawings. However, the exemplary embodiments may be implemented in various forms, and are not understood as being limited to the examples described herein. In addition, the exemplary embodiments are provided to make the description of the present disclosure more comprehensive and complete, and completely convey the idea of the exemplary embodiments to a person skilled in the art. The drawings are merely exemplary illustrations of the present disclosure and are not necessarily drawn to scale. The same reference number in the drawings represents the same or similar parts, and therefore, repeated descriptions thereof are omitted.

In addition, the described features, structures, or characteristics may be combined in one or more exemplary embodiments in any appropriate manner. In the following description, a lot of specific details are provided to give a comprehensive understanding of the exemplary embodiments of the present disclosure. However, a person skilled in the art should be aware that, the technical solutions in the present disclosure may be implemented without one or more of the specific details, or another method, component, step, and the like may be used. In other cases, well-known structures, methods, implementations, or operations are not shown or described in detail to avoid obscuring aspects of the present disclosure.

The block diagrams shown in the drawings represents functional entities and do not necessarily correspond to physically or logically independent entities. Such functional entities may be implemented in the form of software, or implemented in one or more hardware modules or integrated circuits, or implemented in different networks and/or processor apparatuses and/or micro-controller apparatuses.

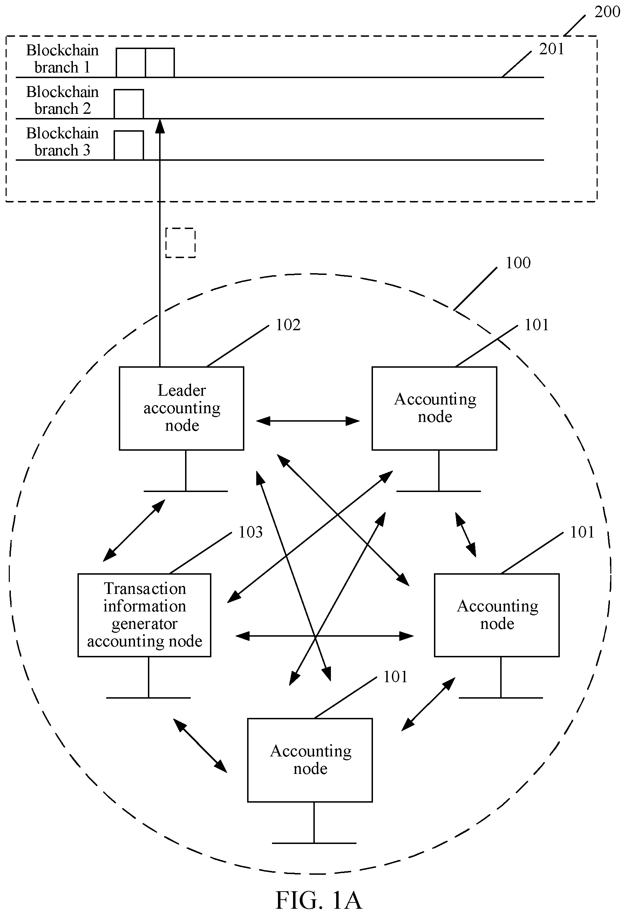

System architectures and an entire process to which the embodiments of the present disclosure are applied are first described below with reference to FIG. 1A to FIG. 1C.

In a system architecture shown in FIG. 1A, a group of accounting nodes 100 includes multiple accounting nodes 101, and there is a leader accounting node 102 in the multiple accounting nodes 101. The leader accounting node 102 may be fixed, or may be selected from the accounting nodes 101 periodically. In the system architecture shown in FIG. 1A, each accounting node 101 is also a generator node for generating transaction information, that is, a transaction information generator accounting node 103.

The transaction information generator accounting node 103 generates transaction information that needs to be recorded on a blockchain 200, and transmits the transaction information to the leader accounting node 102. The leader accounting node 102 buffers the transaction information instead of uploading the transaction information onto the blockchain immediately, and then packages the transaction information into a packet for uploading in a case that a packaging condition (for example, the buffered transaction information has a preset number or a preset size) is met. As the blockchain 200 includes three (although Figure 1A shows three blockchain branches, there may be another number of blockchain branches) blockchain branches 201, the leader accounting node 102 needs to determine a blockchain branch 201 on which the packet is to be recorded. In the conventional technology, if a previous data block of a target data block is to be recorded on a blockchain branch 1 and a consensus on the previous data block is not completed, an abstract can only be determined if the consensus on the previous data block is completed, then the abstract is filled in a block header of the target data block. As a result, the efficiency of uploading is low. There are three blockchain branches in FIG. 1A, and except for the blockchain branch 1, consensus on a last data block of a blockchain branch 2 and a last data block of a blockchain branch 3 has been completed, therefore, any one of the blockchain branch 2 and the blockchain branch 3 may be selected for uploading. Because the consensus on last data blocks of the two blockchain branches has been completed, abstracts of the data blocks are determined, in this way, the abstract may be filled in the block header of the target data block, and the target data block is transmitted to other accounting nodes 101 in the group of accounting nodes 100 for performing consensus, then the target data block is uploaded onto the selected blockchain branch if consensus is completed, thereby improving the efficiency of block uploading.

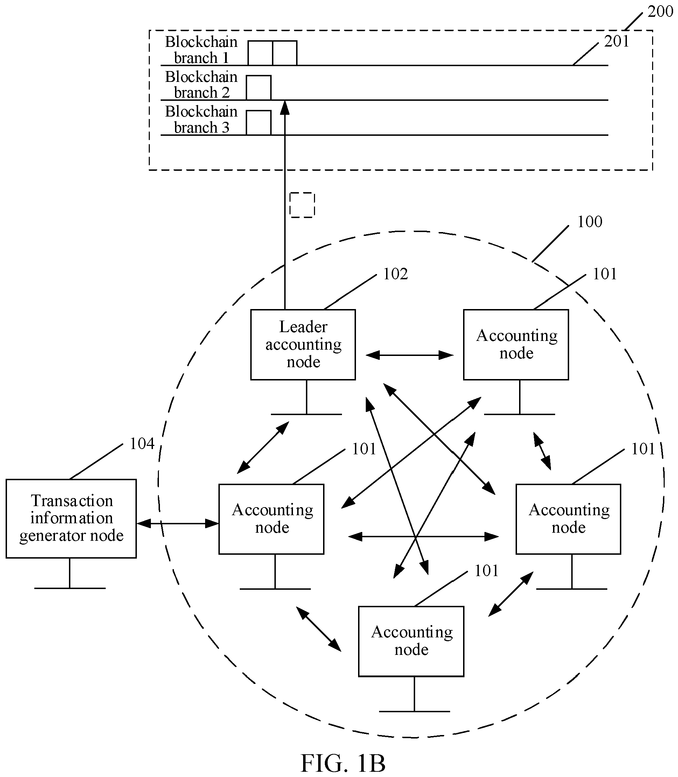

FIG. 1B shows another system architecture to which a method for recording a data block on a blockchain is applied according to an embodiment of the present disclosure. FIG. 1B differs from FIG. 1A in that the group of accounting nodes 100 do not serve as generator nodes for generating transaction information. Transaction information generator node 104 is located outside the group of accounting nodes 100, and each of the transaction information generator nodes 104 corresponds to an accounting node 101 in the group of accounting nodes 100. In a case of generating transaction information that needs to be uploaded, the transaction information generator node 104 transmits the transaction information to the corresponding accounting node 101, and the corresponding accounting node 101 transmits the transaction information to the leader accounting node 102. A process of packaging and uploading by the leader accounting node is the same as that shown in FIG. 1A, and details are not described again.

In FIG. 1B, the transaction information generator node 104 has no permission for accounting (uploading a data block onto the blockchain), and also cannot perform verification and witness on any accounting behavior of the accounting node 101, so the transaction information generator node 104 can only completely trust the accounting node 101.

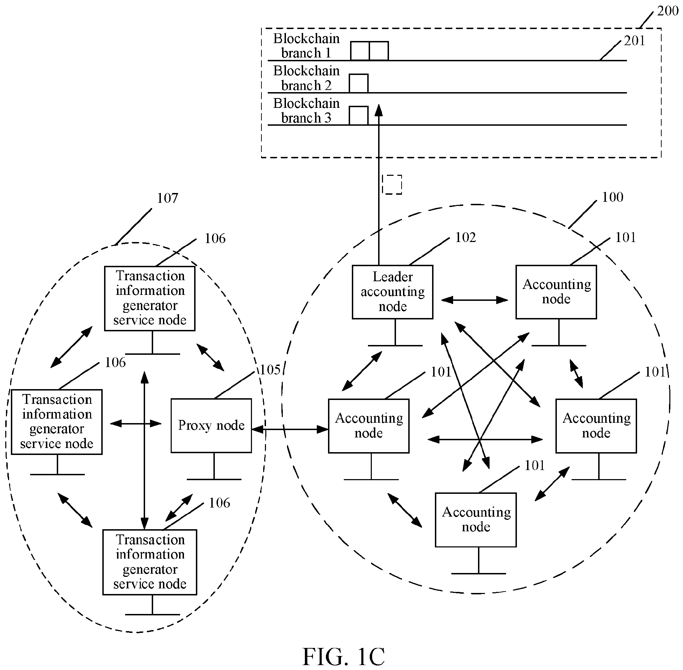

In FIG. 1C, transaction information generator service nodes 106 are also located outside the group of accounting nodes 100. Different from FIG. 1B, the transaction information generator service nodes 106 form a group of service nodes 107. In the group of service nodes 107, although the transaction information generator service nodes 106 have no permission for accounting (uploading a data block onto the blockchain), the transaction information generator service nodes 106 may perform verification and witness on the accounting behavior of the accounting nodes 101.

Specifically, in a case that the transaction information generator service node 106 has transaction information that needs to be uploaded, the transaction information generator service node 106 transmits the transaction information to a proxy node 105. The proxy node 105 is a node in the group of service nodes 107 that is used as an interface between the group of accounting nodes 100 and the group of service nodes 107. The proxy node 105 transmits the transaction information to an accounting node 102 in the group of accounting nodes 100, and the accounting node 102 transmits the transaction information to the leader accounting node 102. A process of packaging and uploading by the leader accounting node 102 is the same as that shown in FIG. 1A, and details are not described again.

In a case of uploading a data block, the leader accounting node 102 records an abstract obtained by performing an abstract operation on a block body of the data block and a signature obtained by encrypting the abstract by using a private key of the leader accounting node 102 in a block header. After uploading the data block onto the blockchain, the leader accounting node 102 transmits the block header of the data block to the transaction information generator service nodes 106 through the proxy node 105. The transaction information generator service node 106 each decrypts the signature by using a public key of the leader accounting node 102, to obtain an abstract, and compare the obtained abstract with the abstract included in the block header. If the obtained abstract is the same as the abstract included in the block header, signature verification is passed; if the obtained abstract is different from the abstract included in the block header, the signature verification is not passed. In this way, a community cheating behavior of all the accounting nodes 101 can be prevented by performing verification on the accounting of the accounting nodes 101. Therefore, the system architecture in FIG. 1C differs from that in FIG. 1B in that the transaction information generator service nodes 106 can witness the accounting behavior of the accounting nodes 101 instead of passively trusting the accounting nodes 101.

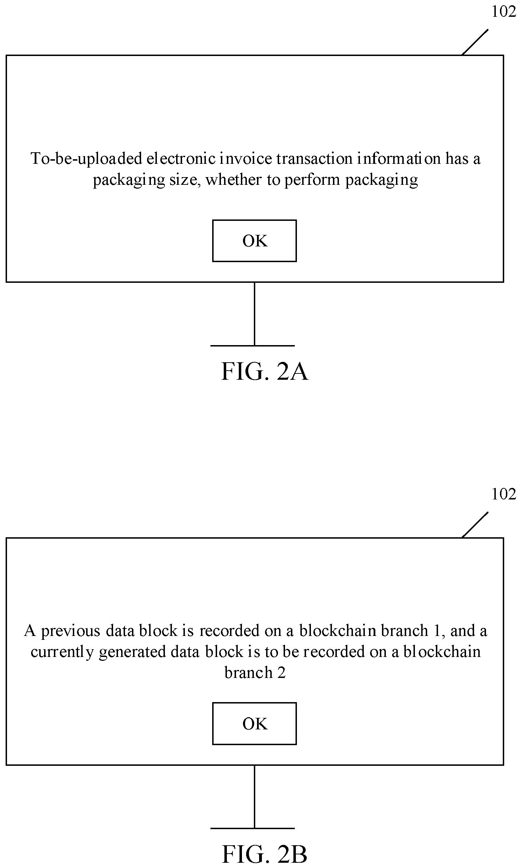

FIG. 2A to FIG. 2E are diagrams each showing an interface generated in a process of performing a method for recording a data block on a blockchain in an application scenario in which an electronic invoice is uploaded onto a blockchain.

A process of transferring an electronic invoice from one party to another party is considered as one transaction of the electronic invoice. Information related to the transaction is referred to as transaction information. A taxing terminal releases an electronic invoice to an invoice issuing terminal, thus a transaction of releasing is performed, and transaction information of releasing of the electronic invoice needs to be recorded on the blockchain. The invoice issuing terminal issues the electronic invoice to a personal settlement terminal, thus a transaction of issuance of the electronic invoice is performed, and transaction information of issuance of the electronic invoice needs to be recorded on the blockchain. The personal invoice settlement terminal and a settlement party terminal perform settlement, thus a transaction of settlement is performed on the electronic invoice, and transaction information of the settlement needs to be recorded on the blockchain. In any of the above cases, the transaction information needs to be uploaded onto the blockchain.

After receiving transaction information that needs to be recorded in a target data block, the leader accounting node 102 does not immediately package the transaction information and upload the transaction information, instead, the leader accounting node 102 packages the transaction information into the target data block in a case that the transaction information that needs to be recorded in the target data block has a preset size or has a preset number. When the transaction information that needs to be recorded in the target data block has the preset size, an interface shown in FIG. 2A is presented at the leader accounting node 102, to prompt that "transaction information of the electronic invoice that needs to be uploaded has a preset packaging size, and packaging can be performed".

If an administrator clicks an icon "OK" on the interface shown in FIG. 2A, a blockchain branch for recording is to be selected. In the blockchain, a previous data block is to be recorded on the blockchain branch 1, and consensus on the previous data block has not been completed. If the target data block is also to be recorded on the blockchain branch 1, it is required to wait until the consensus on the previous data block is completed, then an abstract of the previous data block can be recorded in the block header of the target data block, resulting in low efficiency of uploading. Therefore, a blockchain branch may be selected from two blockchain branches for which consensus on the last data block has been completed, that is, the blockchain branches 2 and 3, for example, the blockchain branch 2 may be selected. An abstract of the last data block on the blockchain branch 2 may be directly recorded in the block header of the target data block, and the target data block is recorded on the blockchain branch 2. In this way, waiting until the consensus on the previous data block is completed for obtaining the abstract to fill a block body can be avoided. In this case, an interface shown in FIG. 2B is presented to prompt that "a previous data block is to be recorded on a blockchain branch 1, and a currently generated target data block is to be recorded on a blockchain branch 2".

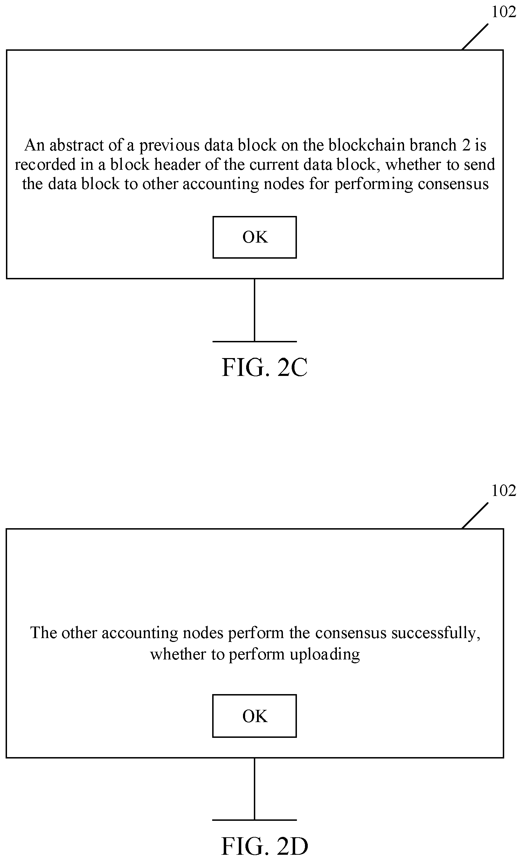

If the administrator clicks an icon "OK" on the interface shown in FIG. 2B, an interface shown in FIG. 2C is presented to prompt that "an abstract of a previous data block on the blockchain branch 2 has been recorded in a block header of the target data block, and whether to transmit the target data block to other accounting nodes for performing consensus". If the administrator clicks an icon "OK", the target data block is sent to the other accounting nodes for performing consensus, and the present accounting node records the target data block on the blockchain.

In a case that consensus is being performed by the other accounting nodes successfully, an interface shown in FIG. 2D is presented to prompt that "consensus is being performed by the other accounting nodes successfully, and whether to perform uploading". If the administrator clicks an icon "OK", the other accounting nodes record the target data block on the blockchain.

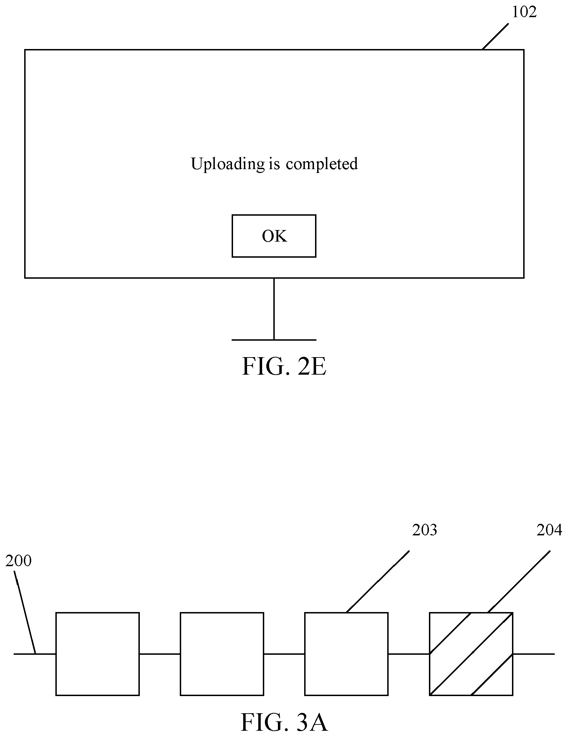

After uploading, an interface shown in FIG. 2E is presented to prompt that "uploading is completed".

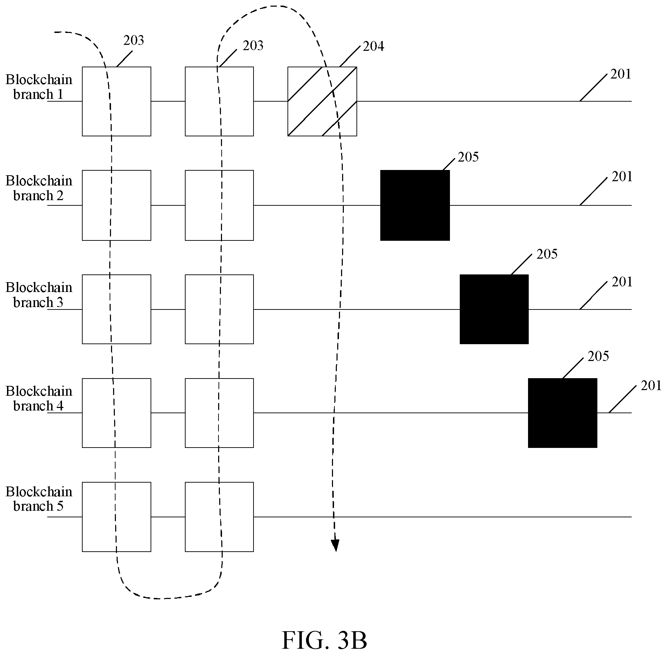

A difference between a method for recording a data block in a multi-blockchain branch structure according to an embodiment of the present disclosure and a method for recording a data block in a single-blockchain structure in the conventional technology is described below with reference to FIG. 3A and FIG. 3B.

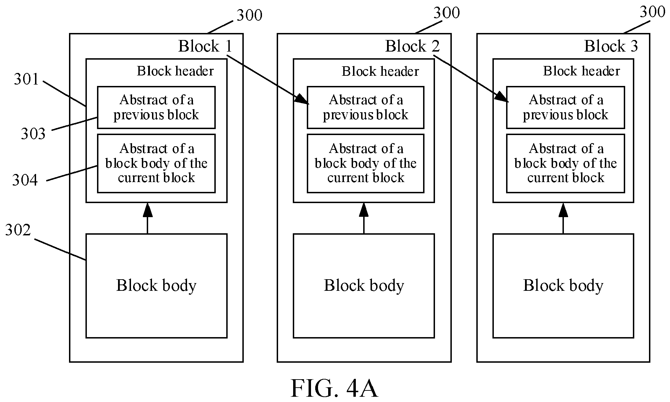

As shown in FIG. 4A, a data structure of a data block includes a block header 301 and a block body 302. The block body 302 includes all transaction information that has been uploaded onto the blockchain, which indicates essential content that is uploaded onto the blockchain. The block header 301 carries additional information (for example, identifier information) that is uploaded onto the blockchain. The block header 302 needs to record at least two kinds of contents, that is, an abstract of a block body of a target data block, and an abstract of a previous data block on the blockchain. The abstract of the block body of the target data block is an identifier that uniquely represents the current data block, which is recorded for the convenience of querying. The abstract of the previous data block on the blockchain is recorded such that each block can include content related to a previous block, and content of the block itself is also included in a next block, thereby achieving the purpose of tamper-proof. If one block on the blockchain is tampered with privately, content in a block header of a previous block cannot match content in a block header of a current block, which is easily detected.

Therefore, as shown in FIG. 3A, in the conventional single-blockchain structure, since a block header of each data block needs to be filled with an abstract of a previous data block, a field of the target data block cannot be determined before consensus on the previous data block is completed. In this case, the target data block can be uploaded only after the consensus on the previous data block is completed. As shown in FIG. 3A, a data block 204 on which consensus is being performed can be uploaded only after the previous data block becomes a data block 203 that has been uploaded (consensus is completed).

In the embodiments of the present disclosure, as shown in FIG. 3B, the blockchain is divided into blockchain branches 1 to 5. A curve in FIG. 3B shows an order in which each blockchain branch in the blockchain branches is selected for uploading. In a case that ten data blocks 203 have been uploaded onto the blockchain, and consensus on the data block 204 is being performed, and the data block 204 is to be recorded on the blockchain branch 1, subsequent to-be-uploaded data blocks 205 will not be recorded on the blockchain branch 1, and will be successively recorded on the blockchain branches 2, 3, 4, ... each of which has no data block on which consensus is being performed. This is because if the data block 205 is to be recorded on the blockchain branch 1, an abstract of the data block 204 can be obtained only when the consensus on the data block 204 is completed and is recorded in a block header of a current data block 205 for uploading, resulting in a long waiting time, and processing cannot be performed in parallel, resulting in a low efficiency. The problem can be solved if the to-be-uploaded data blocks are successively recorded on the blockchain branches 2, 3, and 4... this is because that consensus on the last data block on each the blockchain branches is completed, and an abstract of the last data block on the blockchain branch may be recorded in a block header of a to-be-uploaded data block. Therefore, the data block may be quickly recorded on the blockchain branch, thereby improving the efficiency of uploading.

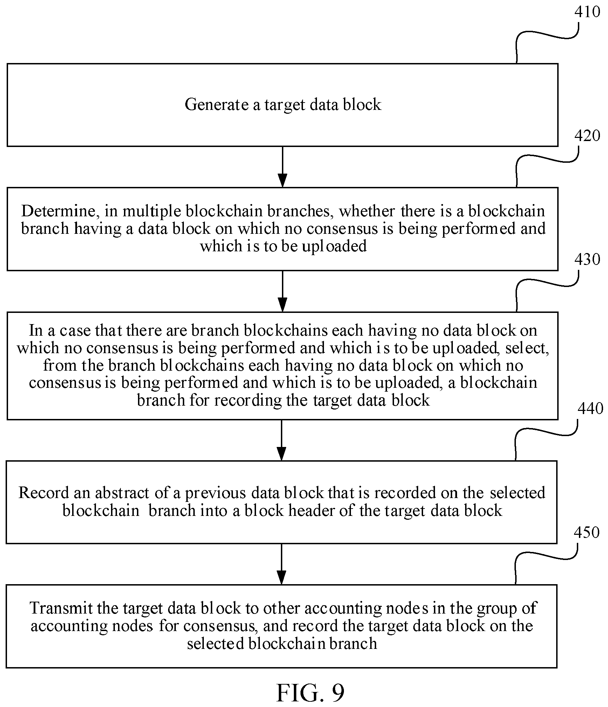

As shown in FIG. 9, according to an embodiment of the present disclosure, a method for recording a data block on a blockchain is provided. The method is performed by the leader accounting node 102 in FIG. 1A to FIG. 1C. The leader accounting node may be fixed, or may be selected periodically. A method for selecting the leader accounting node 102 is described in detail in the following.

In this embodiment, the blockchain includes multiple blockchain branches. The blockchain branches are obtained by dividing the blockchain, on all of which data blocks are recorded by the same group of accounting nodes, and all of which occupy the same process. The same process indicates that distribution of the blockchain branches is uniformly scheduled, and data blocks recorded on each blockchain branch are also recorded in a total scheduling order, which is in contrast to a concept of sub-blockchains. The sub-blockchains are obtained by dividing the blockchain, on which data blocks are recorded by different groups of accounting nodes, and which occupy different processes. For example, sub-blockchains 1, 2, and 3 may respectively record data blocks of transactions of supply chain finance, electronic invoices, and legal digital currency, and the data blocks are uploaded onto the blockchain by using an accounting node group 1, an accounting node group 2, and an accounting node group 3 that respectively record the data blocks of the supply chain finance, the electronic invoices, and the legal digital currency. An order in which each data block is uploaded onto the blockchain by using each accounting node group is also independent of each other and does not affect each other. In contrast, blockchain branches 1, 2, and 3 perform recording by using the same group of accounting nodes, and an order in which data blocks are recorded on the blockchain branches 1, 2, and 3 is also affected by an order in which the data blocks are generated in the group of accounting nodes. The order in which the data blocks are recorded on the blockchain branches is not independent, and is controlled by an order in which the data blocks are generated in the entire blockchain.

As shown in FIG. 9, in this embodiment, the method includes the following steps:

step 410, generating a target data block;

step 420, determining, in the multiple blockchain branches, whether there is a blockchain branch having a data block on which consensus is being performed and which is to be uploaded;

step 430, in a case that there are blockchain branches each having no data block on which consensus is being performed and which is to be uploaded, selecting, from the blockchain branches each having no data block on which consensus is being performed and which is to be uploaded, a blockchain branch for recording the target data block;

step 440, recording an abstract of a previous data block that is recorded on the selected blockchain branch in a block header of the target data block; and

step 450, transmitting the target data block to other accounting nodes in the group of accounting nodes for performing consensus, and recording the target data block on the selected blockchain branch.

The above steps are described in detail in the following.

In step 410, the target data block is generated.

The target data block includes transaction information that needs to be uploaded and is to be uploaded onto the blockchain. In an embodiment, after receiving transaction information that needs to be recorded in the target data block, the leader accounting node 102 does not immediately package the transaction information for uploading, instead, the leader accounting node 102 packages the transaction information into the target data block only in a case that the transaction information that needs to be recorded in the target data block meets a preset condition, for example, has a preset size or has a preset number.

In step 420, it is determined whether there is a blockchain branch having a data block on which consensus is being performed and which is to be uploaded in the multiple blockchain branches.

Data blocks that need to be uploaded by the group of accounting nodes should be uploaded onto the blockchain by the leader accounting node. Therefore, the leader accounting node knows clearly, in the blockchain branches, that which blockchain branch has a data block on which consensus is being performed and which blockchain branch has no data block on which consensus is being performed. In an embodiment, a consensus identification bit may be set for each blockchain branch in the leader accounting node. Each time a data block is generated and a blockchain branch to which the data block is recorded is selected, a consensus identification bit corresponding to the selected blockchain branch is set to be 1. Once consensus on the blockchain branch is completed, a consensus identification bit corresponding to the blockchain branch is set to be 0. In this way, those blockchain branches each with a consensus identification bit of 0 are blockchain branches having no data block on which consensus is being performed and which is to be uploaded.

In step 430, in a case that there are the blockchain branches each having no data block on which consensus is being performed and which is to be uploaded, a blockchain branch is selected from the blockchain branches each having no data block on which consensus is being performed and which is to be uploaded, for recording the target data block.

In a manner of selecting the blockchain branch for recording the target data block, selection is performed according to an order of sequence numbers in the blockchain branches each having no data block on which consensus is being performed and which is to be uploaded.

In this embodiment, the selecting, from the blockchain branches each having no data block on which consensus is being performed and which is to be uploaded, a blockchain branch for recording the target data block includes:

determining first blockchain branches from the blockchain branches each having no data block on which consensus is being performed and which is to be uploaded, where the sequence number of each of the first blockchain branches is greater than a sequence number of a second blockchain branch, and the second blockchain branch is a blockchain branch on which the previous data block of the target data block is recorded;

selecting, from the first blockchain branches, a blockchain branch with a smallest sequence number as the blockchain branch for recording the target data block; and

in a case that none of the blockchain branches each having no data block on which consensus is being performed and which is to be uploaded has a sequence number greater than the sequence number of the second blockchain branch, selecting, from the blockchain branches each having no data block on which consensus is being performed and which is to be uploaded, a blockchain branch with a smallest sequence number as the blockchain branch for recording the target data block.

Selection is performed in blockchain branches each of which has no data block on which consensus is being performed and which is to be uploaded and each of which has a greater sequence number than a blockchain branch to which a previous data block is recorded, such that it can be ensured that selection is performed in an ascending order of sequence numbers. A blockchain branch with the smallest sequence number is selected, from first blockchain branches each of which has a greater sequence number a blockchain branch (that is, a second blockchain branch) on which a previous data block is recorded, as the blockchain branch for recording the target data block, to ensure that there is no omission of blockchain branch during the selection. For example, there are five blockchain branches respectively with sequence numbers of 1 to 5, and the blockchain branches with the sequence numbers of 1, 3, and 5 are the blockchain branches each having no data block on which consensus is being performed. A previous data block is uploaded onto the blockchain branch 2, and in this case, selection is to be performed between the blockchain branches 3 and 5 which have greater sequence numbers than the sequence number 2. Because the sequence number 3 is smaller, the blockchain branch 3 is selected for uploading.

In addition, there is required a circular mechanism to ensure that when a blockchain branch with a large sequence number is selected, and no blockchain branch with a greater sequence number existed in the blockchain branches each having no data block on which consensus is being performed, detection can be performed from a blockchain branch with the smallest sequence number. Therefore, if there is no blockchain branch with a greater sequence number than a blockchain branch (that is, a second blockchain branch) onto which a previous data block is uploaded existed in blockchain branches each having no data block on which consensus is being performed, a blockchain branch with the smallest sequence number is selected from the blockchain branches each having no data block on which consensus is being performed and which is to be uploaded as the blockchain branch for recording the target data block, that is, selection is performed again from the blockchain with the smallest sequence number. For example, there are five blockchain branches respectively with sequence numbers of 1 to 5, and only the blockchain branches with the sequence numbers of 1 to 3 have no data blocks on which consensus is being performed. A previous data block is uploaded onto the blockchain branch 4, thus there is no blockchain branch having a sequence number greater than 4 in the blockchain branches each having no data block on which consensus is being performed. Therefore, the process should be performed returning to the sequence number 1, and the blockchain branch 1 is selected for uploading.

This embodiment has the advantage that the process can be performed in a polling manner of sequence numbers, which is performed conveniently and easily, and has a low cost.

In a manner of selecting the blockchain branch for recording the target data block, according to a principle of balancing the number of data blocks on each blockchain branch, the target data block is allocated to a blockchain branch on which the fewest data blocks have been recorded. In this embodiment, the selecting, from the blockchain branches each having no data block on which consensus is being performed and which is to be uploaded, a blockchain branch for recording the target data block includes:

determining the number of data blocks recorded on each of the blockchain branches each having no data block on which consensus is being performed and which is to be uploaded; and

selecting a blockchain branch on which the fewest data blocks have been recorded as blockchain branch for recording the target data block.

In an embodiment, the number of data blocks recorded on each of the blockchain branches each having no data block on which consensus is being performed and which is to be uploaded may be determined by querying a block height of a last data block on each blockchain branch having no data block on which consensus is being performed and which is to be uploaded. The block height refers to a sequence number of a block on the blockchain branch in an order of recording time. On a blockchain branch, a height of the first recorded data block is set as 1, a height of the second recorded data block is set as 2, and so on. In this way, the block height represents the number of data blocks recorded on the blockchain branch.

This embodiment has the advantages that the number of data blocks on each blockchain branch can be balanced, thereby improving reasonable use of resources.

In another manner of selecting the blockchain branch for recording the target data block, according to a recording principle of time equalization on each blockchain branch, the target data block is allocated to a blockchain branch having a maximum time difference of a recording time of a last data block with respect to the current data in the blockchain branches each having no data block on which consensus is being performed and which is to be uploaded. In this embodiment, the selecting, from the blockchain branches each having no data block on which consensus is being performed and which is to be uploaded, a blockchain branch for recording the target data block includes: determining a time difference between a current time and a recording time of a last data block on each of the blockchain branches each having no data block on which consensus is being performed and which is to be uploaded. For example, a blockchain branch corresponding to a maximum time difference may be selected as the blockchain branch for recording the target data block.

The leader accounting node may store a correspondence table between a data block identifier and a recording time. The recording time of the last data block on the blockchain branch having no data block on which consensus is being performed and which is to be uploaded may be obtained by searching the correspondence table based on an identifier of the last data block on the blockchain branch having no data block on which consensus is being performed and which is to be uploaded.

The advantage of selecting a blockchain branch with a maximum difference between the current time and a recording time of the last recorded data block as the blockchain branch for recording the target data block is that data blocks of which uploading times are close to each other are distributed to different blockchain branches, such that data blocks recorded on each blockchain branch can have uploading times that are not close to each other, thereby realizing balance in the aspect of the uploading times of the data blocks among the blockchain branches.

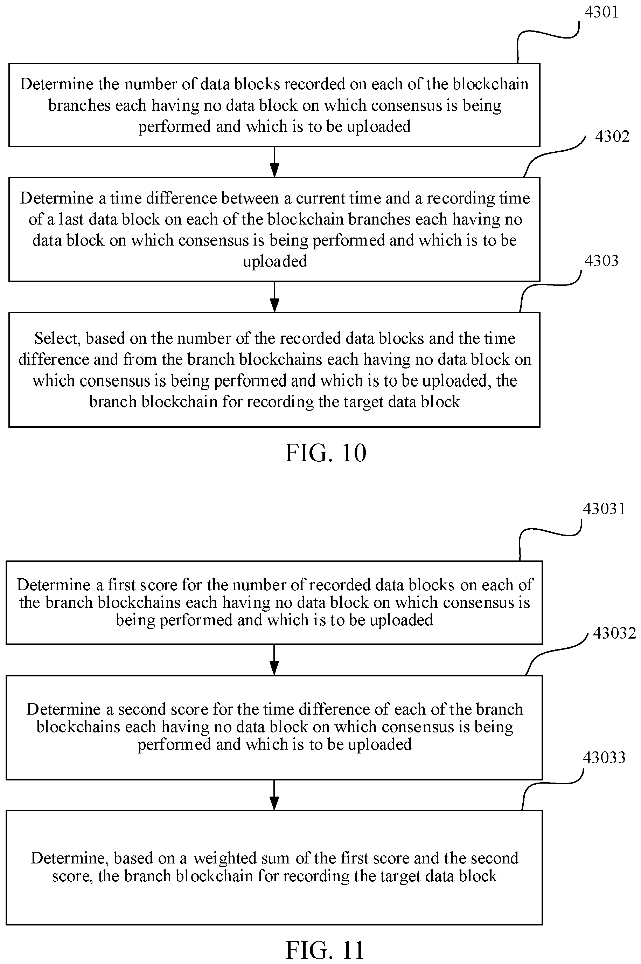

In another embodiment, as shown in FIG. 10, the selecting, from the blockchain branches each having no data block on which consensus is being performed and which is to be uploaded, a blockchain branch for recording the target data block includes the following steps:

step 4301, determining the number of data blocks recorded on each of the blockchain branches each having no data block on which consensus is being performed and which is to be uploaded;

step 4302, determining a time difference between a current time and a recording time of a last data block on each of the blockchain branches each having no data block on which consensus is being performed and which is to be uploaded; and

step 4303, selecting, based on the number of the recorded data blocks and the time difference and from the blockchain branches having no data block on which consensus is being performed and which is to be uploaded, the blockchain branch for recording the target data block.

Compared with the embodiment in which only the number of data blocks recorded on each of the blockchain branches is considered or the embodiment in which a time difference between a current time and a recording time in a block header of a last recorded data block, in this embodiment, not only balance of the number of data blocks on each blockchain branch is considered, but also balance of data blocks that are uploaded at different times on the blockchain branches is also considered, which facilitates the entire balance of the data blocks on the blockchain branches, thereby improving the cooperative utilization of resources.

As shown in FIG. 11, in an embodiment, step 4303 includes the following steps:

step 43031., determining a first score for the number of data blocks recorded on each of the blockchain branches each having no data block on which consensus is being performed and which is to be uploaded.

step 43032, determining a second score for the time difference of each of the blockchain branches each having no data block on which consensus is being performed and which is to be uploaded.

step 43033, determining, based on a weighted sum of the first score and the second score, the blockchain branch for recording the target data block.

In this embodiment, the number of data blocks recorded on each of the blockchain branches or a time difference between a current time and a recording time in a block header of a last recorded data block is given a score, and the blockchain branch for recording the target data block is comprehensively determined by using the score. The advantage of this manner is that, the blockchain branch for recording the target data block is selected quantitatively, thereby improving the accuracy of selecting a blockchain branch.

In an embodiment, step 43031 may be implemented by using an equation. If a blockchain branch has a smaller number of data blocks recorded thereon, the blockchain branch is increasingly expected to be determined as the blockchain branch for recording the target data block, thus a higher first score may be set for the number of data blocks recorded on the blockchain branch. Therefore, the following equation may be set.

$$S1 = a1/(1+P) \qquad\qquad \text{Equation 1}$$

where S 1 represents the first score, a1 is a constant preset based on experience, and P represents the number of data blocks recorded on the blockchain branch. The reason for setting (1+P) as a denominator is to prevent the denominator from being equal to 0 when there is no data block in a blockchain branch for uploading. The first score may be calculated according to the equation 1 for each blockchain branch having no data block on which consensus is being performed and which is to be uploaded.

The advantage of calculating the first score by using the equation is that the accuracy of selecting a blockchain branch is improved.

In another embodiment, step 43031 may be implemented by searching a preset correspondence table between the first score and the number of data blocks recorded on the blockchain branch. The following is an example of the correspondence table.

Table 1 Correspondence table between a first score and the number of data blocks recorded on a blockchain branch

| The number of data blocks | First score |
| --- | --- |
| 0-1 | 1 |
| 2-4 | 0.8 |
| 5-9 | 0.6 |
| 10-19 | 0.4 |
| 20-49 | 0.2 |
| More than 50 | 0 |

In this way, the first score for the blockchain branch may be obtained by searching the correspondence table between the first score and the number of data blocks recorded on the blockchain branch.

The advantage of the table lookup manner is that the operation is simple and easy to operate.

In an embodiment, step 43032 may be implemented by using an equation. If a time difference between a current time and a recording time in a block header of a last recorded data block is large, the blockchain branch is increasingly expected to be determined as the blockchain branch for recording the target data block, thus a higher second score may be set for the time difference between the current time and the recording time in the block header of the last recorded data block. Therefore, the following equation may be set.

$$S2=a2\Delta T \qquad\qquad\qquad \text{Equation 2}$$

where S2 represents the second score, a2 is a constant preset based on experience, and $\Delta T$ represents the time difference between the current time and the recording time in the block header of the last recorded data block. The second score may be calculated according to the equation 2 for each blockchain branch having no data block on which consensus is being performed and which is to be uploaded.

Similarly, in another embodiment, step 43032 may be implemented by searching a preset correspondence table between the second score and the time difference between the current time and the recording time in the block header of the last recorded data block. The following is an example of the correspondence table.

Table 2 Correspondence table between a second score and a time difference between a current time and a recording time in a block header of a last recorded data block

| Time difference between a current time and a recording time in a block header of a last recorded data block. | Second score |
|---|---|
| Above 5s | 1 |
| 4-5s | 0.8 |
| 3-4s | 0.6 |
| 2-3s | 0.4 |
| 1-2s | 0.2 |
| 0-1s | 0 |

In step 43033, the blockchain branch for recording the target data block is determined based on a weighted sum of the first score and the second score.

The advantage of this embodiment is that different weights are assigned to the first score and the second score, such that different contributions of the number of data blocks recorded on the blockchain branch and the difference between the current time and the recording time in the block header of the last recorded data block on the selection of the blockchain branch are considered, thereby improving the accuracy of determining a blockchain branch.

In an implementation, a blockchain branch with the largest weighted sum of the first score and the second score may be determined as the blockchain branch for recording the target data block. Alternatively, a blockchain branch may be selected from blockchain branches each of which a weighted sum or a weighted average value of the first score and the second score exceeds a predetermined weighted sum threshold, as the blockchain branch for recording the target data block.

In step 440, the abstract of the previous data block recorded on the selected blockchain branch is recorded in the block header of the target data block.

The previous data block recorded on the selected blockchain branch refers to a last data block currently recorded on the selected blockchain branch. The last data block has been uploaded onto the blockchain, and the abstract of the last data block may be immediately recorded in the block header of the target data block for uploading without waiting, thereby improving the efficiency of uploading.

In an embodiment, as shown in FIG. 4A, the block header further includes an abstract of a block body of the target data block. The block body includes all transaction information in the target data block. Since block bodies having different contents have different abstracts, the abstract uniquely represents the data block. Query may be performed on the data block based on the abstract.

In this embodiment, step 440 includes:

acquiring an abstract of a block body of the target data block according to a predetermined abstract algorithm; and

recording the abstract of the block body of the target data block and the abstract of the previous data block recorded on the selected blockchain branch in the block header of the target data block.

In step 450, the target data block is sent to other accounting nodes in the group of accounting nodes for performing consensus, the target data block is recorded on the selected blockchain branch.

As shown in FIG. 3B, recording the target data block on the selected blockchain branch indicates that the target data block is recorded following the previous data block on the selected blockchain branch, the abstract of the previous data block is recorded in the block header of the target data block, and the abstract of the target data block is recorded in a block header of a next data block to be recorded on the blockchain branch, such that a chain requiring mutual verification and cannot be tampered with can be formed. A block height of the blockchain branch is increased by 1.

In an embodiment, each blockchain branch has an identifier. The identifiers of the blockchain branches are different from each other. Step 450 includes: recording the abstract of the previous data block recorded on the selected blockchain branch and the identifier of the selected blockchain branch in the block header of the target data block.

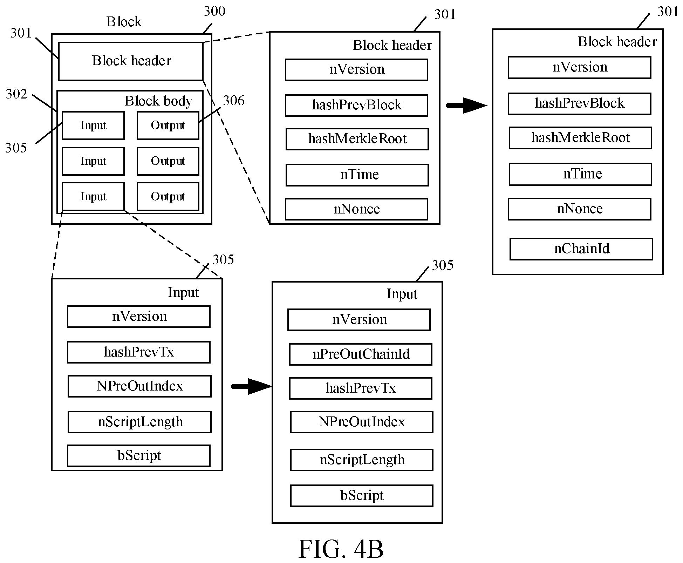

Actually, as shown in FIG. 4B, the block header may not only include the abstract (hashPrevBlock) of the previous data block recorded on the selected blockchain branch and the identifier (nChinaId) of the selected blockchain branch, but also include an abstract (a Merkle tree root as show in FIG. 4B, which is a type of abstract, hashMerkleRoot) of a block body of the target data block, a blockchain version number (nVersion), a recording time (that is, an uploading time, nTime) on the blockchain, and a blockchain special mark (nNonce).

In FIG. 4B, a conventional block header only includes the blockchain version number (nVersion), the abstract (hashPrevBlock) of the previous data block recorded on the blockchain branch, the abstract (HashMerkleRoot) of the block body of the target data block, the recording time (that is, the uploading time, nTime) on the blockchain, and the blockchain special mark (nNonce). In the embodiment of the present disclosure, an identifier (nChinaId) of the blockchain branch is further recorded in the block header. However, a person skilled in the art should understand that the blockchain version number (nVersion), the recording time (nTime) on the blockchain, and the blockchain special mark (nNonce) are optional. In an embodiment, the block header may include none of the above. In another embodiment, the block header may include one or more of the above. In another embodiment, the block header may also include other fields in addition to the above.

The blockchain version number (nVersion) represents a version number of a blockchain system. For example, a blockchain system that records electronic invoice information may be upgraded from a first-generation version to a second-generation version. A networking manner of the blockchain system and a data structure of data blocks on the blockchain may be changed after upgrading. The blockchain version number is recorded in the block header, such that the version of the blockchain system under which the data block is uploaded onto the blockchain can be identified.

The recording time (nTime) on a blockchain is a time at which a data block is recorded on the blockchain. The leader accounting node may first fill a time when the target data block is uploaded onto the blockchain into a field of the recording time, and then upload the target data block onto the blockchain.

The blockchain special mark (nNonce) indicates a field often used to identify bitcoin transactions.

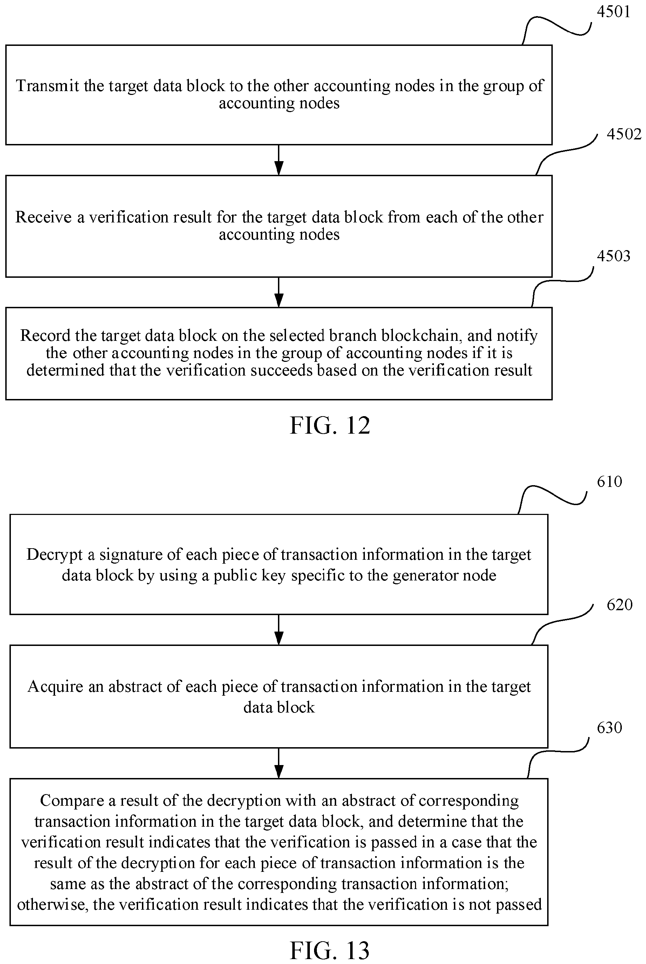

The block header contains the identifier of the blockchain branch, so that according to the identifier, a data block may be conveniently recorded on a blockchain branch corresponding to the identifier. In an embodiment, as shown in FIG. 12, step 450 includes the following steps:

step 4501, transmitting the target data block to other accounting nodes in the group of accounting nodes;

step 4502, receiving a verification result for the target data block from each of the other accounting nodes;

step 4503, in a case of determining that verification succeeds based on the verification result, recording the target data block on the selected blockchain branch and notify the other accounting nodes in the group of accounting nodes of the recording of the target data block on the selected blockchain branch, so that the other accounting nodes record the target data block on the selected blockchain branch based on the identifier of the blockchain branch in the block header.

Step 4501 to step 4503 are described in detail in the following.

In step 4501, the target data block is sent to the other accounting nodes in the group of accounting nodes, so that the other accounting nodes in the group of accounting nodes perform verification on the target data block for performing consensus.

In step 4502, the verification result for the target data block is received from each of the other accounting nodes.

The verification on the target data block by the other accounting nodes includes output consumption verification, data block signature verification, transaction information signature verification, and the like.

The output consumption verification is first described in the following.

In an embodiment, each piece of transaction information in a block body has an input and an output. A transaction may be understood as a process in which existing information is inputted into a transaction information generator node, and the transaction information generator node processes the inputted information to generate and output transaction result information. The information inputted to the transaction information generator node is referred to as the input, and the transaction result information outputted by the transaction information generator node is referred to as the output.

For example, in an application scenario regarding electronic invoices, in a case that a taxing terminal releases an electronic invoice to an invoice issuing terminal, releaser information (for example, the name and address of a tax office) inputted by the taxing terminal serve as an input, and as a result of the issuance of the electronic invoice, a series of electronic invoice identifiers (for example, a number of the electronic invoice) and information (the name of an invoicing party, a taxpayer identification number, and the like) of an invoice issuing terminal filled in the electronic invoice serve as an output. In a case that the invoice issuing terminal issues an electronic invoice to a personal settlement terminal, information (for example, an identifier of the issued electronic invoice) of the electronic invoice inputted from the invoice issuing terminal serves as an input, and as a result of issuing the electronic invoice, the name and contact information of a person requesting for settlement filled in the electronic invoice serve as an output. In a case that the personal settlement terminal requests settlement to a settlement party terminal, the name and the contact information of the person requesting for settlement inputted from the settlement party terminal serve as an input, and as a result of the settlement, the name of the settlement party, a taxpayer identification number, and the like serve as an output. It can be seen that there is a correspondence between the input and the output.

It can be seen from the above that an input of one piece of transaction information may serves as an output of another piece of transaction information. For example, an input of transaction information of issuance of an electronic invoice serves as an output of transaction information of releasing of the electronic invoice, and an input of transaction information of settlement of the electronic invoice serves as an output of transaction information of issuance of the electronic invoice. Therefore, the input is usually linked to an output of transaction information in a previous data block of the target data block that is recorded on the blockchain. For example, if the transaction information of settlement of the electronic invoice is recorded on the target data block, an input of the transaction information is linked to an output of the transaction information of issuance of the electronic invoice on another data block. The link indicates that if an input of one piece of transaction information is linked to an output of another piece of transaction information, the input is represented by the output of the another piece of transaction information, so as to clearly indicate relationship between the transaction information of the data blocks.

In an embodiment, the input includes: a blockchain branch identifier (nPreOutChinaId) to which the input is linked, an abstract (hashPrevTx) of a data block to which the input is linked, and an index (NPreOutIndex) of transaction information in the data block to which the input is linked.

As shown in FIG. 4B, an input of transaction information in an existing block body may include five fields, that is, a blockchain version number (nVersion), an abstract (hashPrevTx) of a data block to which the input is linked, an index (NPreOutIndex), a script length (nScriptLength), and a script (bScript) of transaction information in the data block to which the input is linked. The abstract (hashPrevTx) of the data block to which the input is linked identifies a data block to which the input is linked and that is previously recorded on the blockchain. The index (NPreOutIndex) of the transaction information in the data block to which the input is linked identifies transaction information in the data block to which the input is linked. With the abstract (hashPrevTx) of the data block to which the input is linked, and the index (NPreOutIndex) of the transaction information in the data block to which the input is linked, a position of previously recorded transaction information on the blockchain to which the input is linked on a single blockchain is uniquely determined. However, in a case that there are multiple blockchain branches, another field is required in the input, that is, a blockchain branch identifier (nPreOutChinaId) to which the input is linked. A blockchain branch to which the input is linked is determined first based on the blockchain branch identifier (nPreOutChinaId) to which the input is linked. In a case that the blockchain branch is determined, a previous data block to which the input is linked is determined based on the abstract (hashPrevTx) of the data block to which the input is linked. In a case that the data block is determined, transaction information to which the input is linked is determined based on the index (NPreOutIndex) of the transaction information in the data block to which the input is linked. In this way, previously recorded transaction information to which the input is linked can be accurately positioned in a multi-blockchain branch structure.

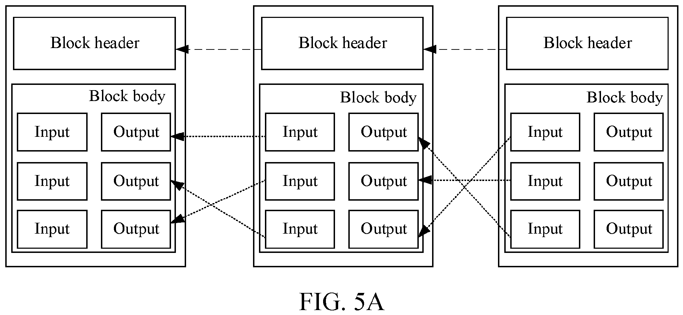

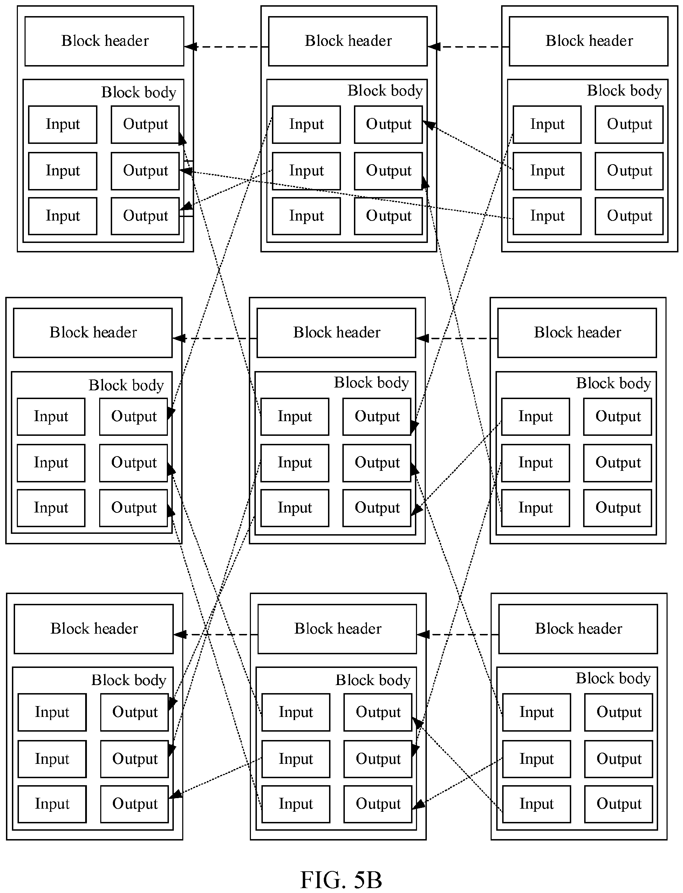

FIG. 5A shows a link relationship between an input and an output of transaction information in a data block in a single-blockchain structure in the conventional technology. FIG. 5B shows a link relationship between an input of transaction information in data block and an output of transaction information in another blockchain branch in a multi-blockchain branch structure according to an embodiment of the present disclosure.

As shown in FIG. 5A, in the existing single-blockchain structure, if an input of one transaction information in a data block is linked to an output of another transaction information, it can be determined that the input is undoubtedly linked to an output of transaction information in a data block previously recorded on the blockchain.

As shown in FIG. 5B, in the multi-blockchain branch structure according to the embodiment of the present disclosure, if an input of one piece of transaction information in a data block is linked to an output of another piece of transaction information, the input is not necessarily linked to an output of transaction information in a data block previously recorded on the blockchain branch on which the transaction information is recorded, but may be linked to an output of transaction information of a data block previously recorded on a blockchain branch other than the blockchain branch on which the transaction information is recorded. In this way, it can be ensured that the blockchain branches share the same process and share the same unoccupied resources. Any one of the blockchain branches can occupy the same unoccupied resources, which is completely different from a case of the sub-blockchain.

In an embodiment, the verification result for the target data block from each of the other accounting node is generated in the following manner (that is, a process of input consumption verification):

determining whether the output to which the input of the transaction information in the target data block is linked is already linked to an input of transaction information in a data block recorded on the blockchain before the target data block is recorded on the blockchain;

determining that the verification result indicates that verification is not passed in a case that the output to which the input of the transaction information in the target data block is linked is already linked to the input of the transaction information in the data block recorded on the blockchain before the target data block is recorded on the blockchain; and

determining that the verification result indicates that verification is passed in a case that the output to which the input of the transaction information in the target data block is linked is not linked to the input of the transaction information in the data block recorded on the blockchain before the target data block is recorded on the blockchain.

The verification is performed to prevent recurrence of transaction behaviors such as repeated settlement of an electronic invoice. An input of transaction information of settlement of an electronic invoice is linked to an output of transaction information of issuance of the electronic invoice. If the electronic invoice is settled after a data block of the transaction information of issuance of the electronic invoice is uploaded onto the blockchain, the input of the transaction information of settlement of the electronic invoice is also linked to the output of the transaction information of issuance of the electronic invoice, and if the transaction information in the target data block is linked to an output of the transaction information of issuance of the electronic invoice, this indicates that there is a repeated settlement behavior, and the output consumption verification is not passed.

In an embodiment, the determining whether the output to which the input of the transaction information in the target data block is linked is already linked to an input of transaction information in another data block recorded on the blockchain before the target data block is recorded on the blockchain includes:
traversing inputs of transaction information in data blocks recorded on the blockchain from a time at which the another data block is recorded on the blockchain to a time at which the target data block is recorded on the blockchain, and determining, one by one, whether each of the inputs is linked to an output of the transaction information in the another data block.

Since a recording time, that is, an uploading time, of a data block is recorded in a block header of the data block, the recording time of the target data block and the recording time of the another data block may be obtained respectively from the target data block and the another data block. Subsequently, all data blocks recorded on the blockchain between the two recording times are determined.

In an embodiment, in a manner of determining all the data blocks recorded on the blockchain between the two recording times, a correspondence table among all recorded data block identifiers (for example, an abstract), recording times, and recorded blockchain branch identifiers is stored in the leader accounting node. This requires that each time the leader accounting node records a data block on a blockchain branch, the leader accounting node also needs to record a recorded data block identifier (for example, an abstract), a recording time, and a recorded blockchain branch identifier in the correspondence table correspondingly. In this way, all recording in the correspondence table between the two recording times may be searched, and corresponding blockchain branches are determined based on blockchain branch identifiers in the recording, and data blocks corresponding to the blockchain branches are determined based on data block identifiers (for example, abstracts) in the recording. The advantage of this embodiment is that, a processing speed of searching all data blocks recorded on the blockchain between the two recording times is improved through table lookup.

In another embodiment, in a manner of determining all the data blocks recorded on the blockchain between the two recording times, for each data block on each blockchain branch, it is determined whether a recording time in a block header of the data block is between the two recording times, and if the recording time is between the two recording times, this indicates that the data block is recorded on the blockchain between the two recording times. The advantage of this embodiment is that a memory of the leader accounting node is not occupied and resources are saved.

After all the data blocks recorded on the blockchain between the two recording times are determined, for an input of transaction information in each data block, it is determined whether the input is linked to an output of transaction information in another data block, If it is determined that the input is linked to the output of the transaction information in the another data block, it indicates that a transaction has been repeated, for example, repeated settlement, and it is determined that the transaction information is invalid; otherwise, it is determined that the transaction information is valid.

The advantage of the manner of traversing inputs of transaction information in data blocks recorded on the blockchain from a time at which the another data block is recorded on the blockchain to a time at which the target data block is recorded on the blockchain, and determining, one by one, whether each of the inputs is linked to an output of the transaction information in the another data block is that the accuracy of verifying validity of the transaction information can be improved.

In another embodiment, the determining whether the output to which the input of the transaction information in the target data block is linked is already linked to an input of transaction information in another data block recorded on the blockchain before the target data block is recorded on the blockchain includes:

querying an occupancy state word corresponding to the output of the transaction information in the another data block to which the input of the transaction information in the target data block is linked;

determining that the verification result indicates that verification is not passed in a case that the occupancy state word indicates an occupied state; and

determining that the verification result indicates that verification is passed in a case that the occupancy state word indicates an unoccupied state.

Correspondingly, after step 450, the method further includes:

setting an occupancy state word corresponding to an output of each piece of transaction information in the target data block to indicate an unoccupied state; and

setting an occupancy state word corresponding to an output of the transaction information in the another data block to which the input of each piece of transaction information in the target data block is linked to indicate an occupied state.

In this embodiment, each time a data block is uploaded onto the blockchain by the leader accounting node, an occupancy state word is assigned to an output of each piece of transaction information in the data block, the occupancy state word and the transaction information are stored in the memory of the leader accounting node, and the occupancy state word is set to an unoccupied state, for example, the occupancy state word is set to 0. Subsequently, once any data block is uploaded onto the blockchain, in addition to assigning occupancy state words to outputs of transaction information in these data blocks and setting the occupancy state words to indicate an unoccupied state, an occupancy state word corresponding to an output of transaction information to which each of the inputs of the transaction information is linked is set to indicate an occupied state, for example, the occupancy state word is set to 1. The occupancy state word that has been set to indicate an occupied state cannot be set to indicate an occupied state again, thereby avoiding recurrence of a transaction such as repeated settlement.

Specifically, the occupancy state word corresponding to the output of the transaction information in the another data block to which the input of each piece of transaction information in the block body is linked is queried, in a case that the occupancy state word indicates an occupied state, it indicates that a transaction (for example, repeated settlement) may occur repeatedly, and it is determined that the verification result indicates that the verification is not passed; otherwise, it is determined that the verification result indicates that the verification is passed.

The advantage of this embodiment is that the output consumption verification can be performed quickly by querying an occupancy state word in the memory, which improves the efficiency of the output consumption verification.

A process of data block signature verification is described below.

In an embodiment, step 440 includes: recording the abstract of a previous data block recorded on the selected blockchain branch and a signature formed by encrypting the abstract by using a private key specific to the leader accounting node in the block header of the target data block.

The verification result for the target data block from each of the other accounting nodes is generated in the following manner:

decrypting the signature by using a public key specific to the leader accounting node; and

comparing a result of the decryption with the abstract in the block header;

determining that the verification result indicates that the verification is passed in a case that the result of the decryption is the same as the abstract; and

determining that the verification result indicates that the verification is not passed in a case that the result of the decryption is different from the abstract.

The advantage of this embodiment is that verification may be performed on accounting of the leader accounting node, so that the accounting has non-repudiation in a subsequent process. The leader accounting node signs a block body by using a private key specific to the leader accounting node, and other accounting nodes generally do not have the private key of the leader accounting node except for the leader accounting node. Therefore, if the block body and the signature can be successfully verified by using a public key of the leader accounting node, it indicates that the block body is certainly uploaded onto the blockchain by the leader accounting node. After that, if there is any problem in content of the block body, for example, if it is reported that the content is tampered with, it is certainly determined that the problem is caused by the leader accounting node. This is because only the leader accounting node can perform signature by using its private key, non-repudiation is generated, such that the security of blockchain uploading is improved.

The public key and the private key of the leader accounting node may be uniformly issued by a dedicated authorization center node (not shown).

A process of transaction information signature verification is described below.

The above embodiments focus on a case of signing a block body of an entire data block, and the following embodiment describes a case of signing each piece of transaction information in the block body. The signature on each piece of transaction information in the block body is performed by a generator node of the transaction information.

In this embodiment, transaction information that needs to be recorded in the target data block is signed by the generator node that generates the transaction information by using a private key specific to the generator node.

In the system architecture shown in FIG. 1A, the generator node that generates the transaction information is the transaction information generator accounting node 103. In the system architecture shown in FIG. 1B, the generator node that generates the transaction information is the transaction information generator node 104 located outside the group of accounting nodes 100. In the system architecture shown in FIG. 1C, the generator node that generates the transaction information is the transaction information generator service node 106 in the service node group 107.

In an embodiment, the public key and the private key specific to the generator node may alternatively be uniformly issued by a dedicated authorization center node (not shown).

In this embodiment, each piece of transaction information in the target data block is signed by a generator node that generates the transaction information by using a private key specific to the generator node, and the signature is recorded in the target data block together with the transaction information. That is, the block body not only includes transaction information, but also includes a signature corresponding to the transaction information. The transaction information and the signature are recorded in the block body in a one-to-one correspondence.

As shown in FIG. 13, in this embodiment, the verification result for the target data block from each of the other accounting nodes is generated in the following manner:

step 610, decrypting a signature of each piece of transaction information in the target data block by using a public key specific to the generator node;

step 620, acquiring an abstract for each piece of transaction information in the target data block; and

step 630, comparing a result of the decryption with an abstract of corresponding transaction information in the target data block, and determine that the verification result indicates that the verification is passed in a case that the result of the decryption for each piece of transaction information is the same as the abstract of the corresponding transaction information; otherwise, the verification result indicates that the verification is not passed.

The transaction information signature verification is performed to verify whether each piece of transaction information in a block body is actually generated by a corresponding generator node, whether each piece of transaction information in a block body is not tampered with, and whether each piece of transaction information in a block body is not lost during transmission. In this embodiment, the security of transaction information in a data block is further improved.

A process in which a transaction information generator node generates a signature of transaction information generally includes: generating an abstract for the transaction information according to a predetermined abstract algorithm; and encrypting the abstract by using a private key specific to the transaction information generator node, to obtain the signature of the transaction information. Correspondingly, when a second signature verification is performed, the signature of the transaction information is decrypted by using a public key specific to the transaction information generator node, then an abstract is generated for the transaction information according to the same predetermined abstract algorithm used when the signature of the transaction information is generated, and the generated abstract is compared with the abstract obtained through decryption. If the two abstracts are the same, it indicates that the transaction information is actually generated by the transaction information generator node and is not lost during transmission, and the transaction information signature verification is passed; otherwise, the transaction information signature verification is not passed.

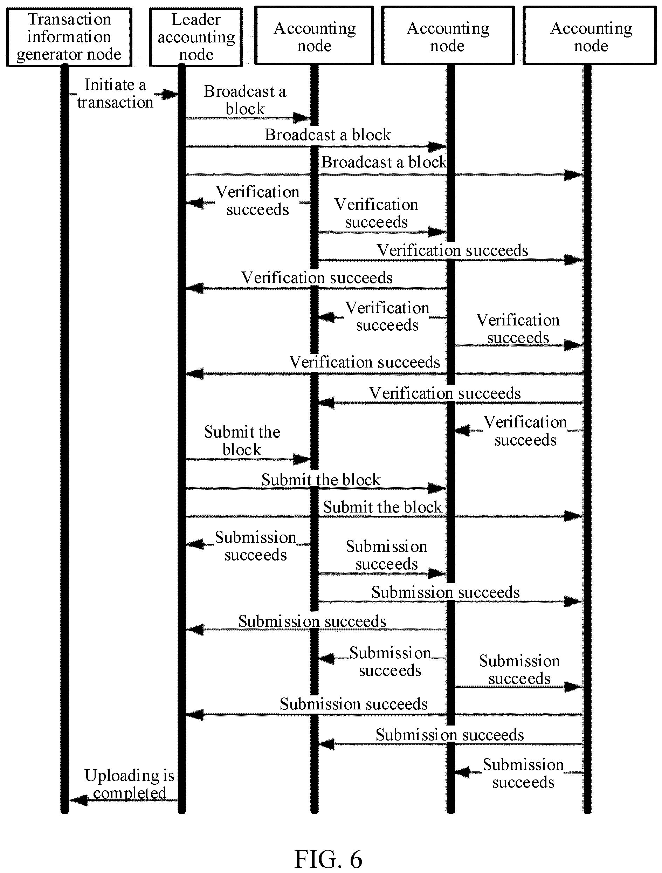

The processes of the output consumption verification, data block signature verification, and transaction information signature verification of the data block are all performed during verification of the other accounting nodes after the leader accounting node in FIG. 6 transmits the data block that needs to be uploaded onto the blockchain to each of the other accounting nodes. After all the verifications are passed, each accounting node on which verification is passed transmits a message indicating that the verification succeeds to all other accounting nodes.

In step 4503, in a case that it is determined that the verification succeeds based on the verification result, the target data block is recorded on the selected blockchain branch, and the other accounting nodes in the group of accounting nodes are notified of the recording of the target data block on the selected blockchain branch, so that the other accounting nodes record the target data block on the selected blockchain branch based on the identifier of the blockchain branch in the block header.

In an embodiment, when the output consumption verification, data block signature verification, and transaction information signature verification are simultaneously performed, if at least one of the three verifications is not passed, the other accounting node transmits a verification result indicating that the verification is not passed to the leader accounting node. If the three verifications are all passed, and the other accounting node transmits a verification result indicating that the verification is passed to the leader accounting node.

In an embodiment, it is determined that the verification succeeds based on the verification result in the following manner. If the number of verification results indicating that the verification is passed that are received by the leader accounting node reaches (2f+1), it is determined that the verification succeeds, where f is a maximum one among integers less than (N-1)/3, N is the number of accounting nodes in the group of accounting nodes. As long as there are more than a preset number (2f+1) of verification results indicating that the verification is passed that are feedback by the other accounting nodes being received, cooperative misbehavior of f or more accounting nodes can be prevented, thereby improving the security of accounting.

This process is shown clearly in FIG. 6. In FIG. 6, the leader accounting node broadcasts a data block to other accounting nodes. After receiving a block body, the other accounting nodes need to perform verification. If the verification is passed, a verification result indicating that the verification is passed is returned. In a case that the leader accounting node receives (2f+1) or more verification results indicating that the verification is passed, it is determined that the verification succeeds.

Then, as shown in FIG. 6, the leader accounting node submits the target data block to a blockchain branch corresponding to a blockchain branch identifier in the block header. In the blockchain system, each accounting node needs to synchronize the same blockchain. Therefore, the leader accounting node also needs to transmit the target data block to other accounting nodes in the group of accounting nodes, so that the other accounting nodes submit the target data block to the selected blockchain branch according to the blockchain branch identifier in the block header. In this way, the synchronization is completed. After performing submission successfully, each of the other accounting nodes transmits a message indicating that the submission succeeds to the leader accounting node. The leader accounting node may determine that uploading is completed after receiving a preset number (2f+1) of messages indicating that the submission succeeds sent by the other accounting nodes, where f is a maximum one of integers less than (N-1)/3, and N is the number of accounting nodes in the group of accounting nodes, and f is the number of accounting nodes misbehaving in the group of accounting nodes that can be accepted by the algorithm.

In an embodiment, after step 420, the method further includes: in a case that each blockchain branch has a data block on which consensus is being performed and which is to be uploaded, waiting until a consensus on the data block of each of the multiple blockchain branches is completed, and selecting a blockchain branch on which consensus on the data block is completed first as the blockchain branch for recording the target data block.

Step 430 should be performed in a condition that there is a blockchain branch having no data block on which consensus is being performed and which is to be uploaded. However, in some cases, because there may be a large number of data blocks that needs to be uploaded in a short period of time, the above condition can not be achieved, that is, each of the blockchain branches has a data block on which consensus is being performed and which is to be uploaded. In this case, it can be waited until the consensus on the data block of each of the blockchain branches is completed, and the blockchain branch for which consensus on the data block is completed first may be selected as the blockchain branch for recording the target data block. The advantage of this operation is that a blockchain branch for which consensus on the data block is completed first can be used for uploading immediately, which saves an uploading time, thereby improving the efficiency of uploading.

After this step, step 440 and step 450 need to be performed, that is, the processes of recording the abstract and performing consensus and uploading need to be performed, which are the same as the above, and details are not described again.

FIG. 3B shows a one-dimensional arrangement of multiple blockchain branches, that is, multiple blockchain branches are sequentially arranged in an order in one dimension, for example, in a listed order of a blockchain branch 1, a blockchain branch 2, a blockchain branch 3, a blockchain branch 4, and a blockchain branch 5, which is easier to manage when the number of blockchain branches is small. If there are thousands of blockchain branches, multi-dimensional arrangement may be a preferred form.

Therefore, in an embodiment, the multiple blockchain branches are arranged in an M-dimensional matrix, M is a positive integer greater than 1, an identifier of each blockchain branch is indicated by a vector of M elements, where each element represents a sequence number of the blockchain branch in a corresponding dimension.

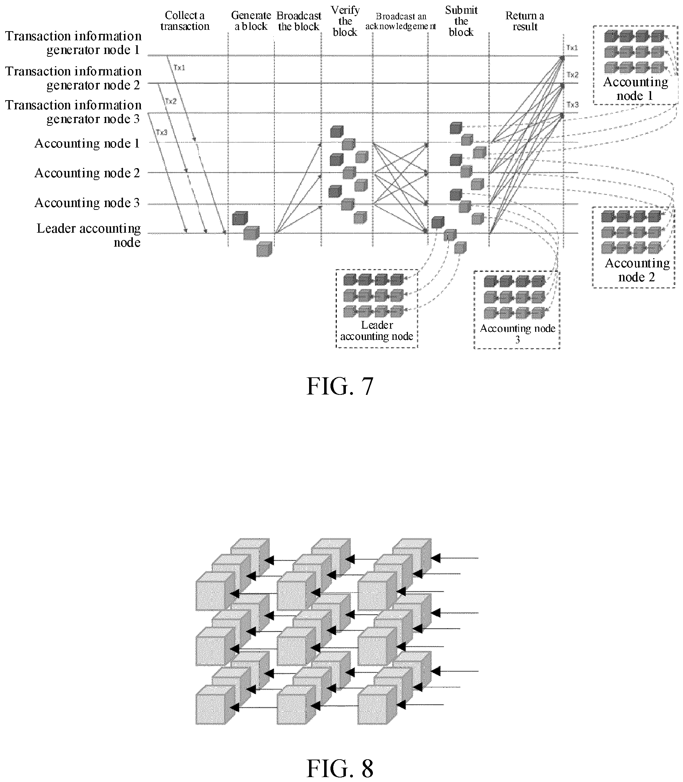

In an example in FIG. 8, M=2, that is, a dimension is 2, and a maximum sequence number on each dimension is 3, that is, there are three sequence numbers of 1, 2, and 3 on each dimension. In this case, an identifier of each blockchain branch is indicated by vectors of two elements, each vector may have a value from 1 to 3, thus there are nine identifiers (1, 1), (1, 2), (1, 3), (2, 1), (2, 2), (2, 3), (3, 1), (3, 2), (3, 3), which respectively representing nine blockchain branches. Data blocks on each blockchain branch are arranged in an order in which the data blocks are recorded in the blockchain branch.

FIG. 8 is a schematic diagram showing an arrangement in which each blockchain branch is arranged with three data blocks. In practice, each blockchain branch may be arranged with another number of data blocks. Moreover, the blockchain branches may be arranged into a matrix of more dimensions, and each dimension may have another number of sequence numbers. An order of recording may be predetermined among the blockchain branches. In order to select a blockchain branch for recording the target data block, a next blockchain branch of a blockchain branch on which a previous data block is recorded may be used as the blockchain branch for recording the target data block in the predetermined order. For example, in FIG. 8, the blockchain branch for recording may be selected in a listed order of (1, 1), (1, 2), (1, 3), (2, 1), (2, 2), (2, 3), (3, 1), (3, 2), (3, 3). In a case that the previous data block is recorded on the blockchain branch (1, 3), the target data block is recorded on the blockchain branch (2, 1).

The multi-dimensional matrix arrangement has the advantage of improving the efficiency of blockchain branch scheduling in a case of a large number of blockchain branches.

FIG. 7 shows an application effect of an embodiment of the present disclosure. In FIG. 7, transaction information generator nodes 1 to 3 generate transaction information, and transmit the transaction information to the leader accounting node for uploading. The leader accounting node receives the transaction information and packages the transaction information in a case that a packaging condition is met. Further, the leader accounting node selects a blockchain branch for recording, that is, the leader accounting node selects a blockchain branch for recording the target data block from the blockchain branches each having no data block on which consensus is being performed and which is to be uploaded. Next, an identifier of the blockchain branch is recorded in a block header of a data block, and the data block is broadcast to the accounting nodes 1 to 3. After receiving the data block, each of the accounting nodes 1 to 3 performs verification such as the output consumption verification, the data block signature verification, and the transaction information signature verification, and broadcasts a verification result to other accounting nodes in the group of accounting nodes. When receiving the verification results indicating that the verification is passed from a preset number of accounting nodes, the leader accounting node submits the data block to a corresponding blockchain branch based on the identifier of the blockchain branch recorded in the block header. Each of the other accounting nodes also submits the data block to the corresponding blockchain branch based on the identifier of the blockchain branch recorded in the block header.

It can be seen from Figure 7 that since the leader accounting node selects a blockchain branch having no data block on which consensus is being performed and which is to be uploaded for recording, it is unnecessary to wait until the previous data block is uploaded. Instead, an abstract of a last data block on a blockchain branch having no data block on which consensus is being performed and which is to be uploaded may be record in the block header of the target data block, and then the target data block is uploaded onto the blockchain, thereby reducing waiting time, thus improving the efficiency of uploading.

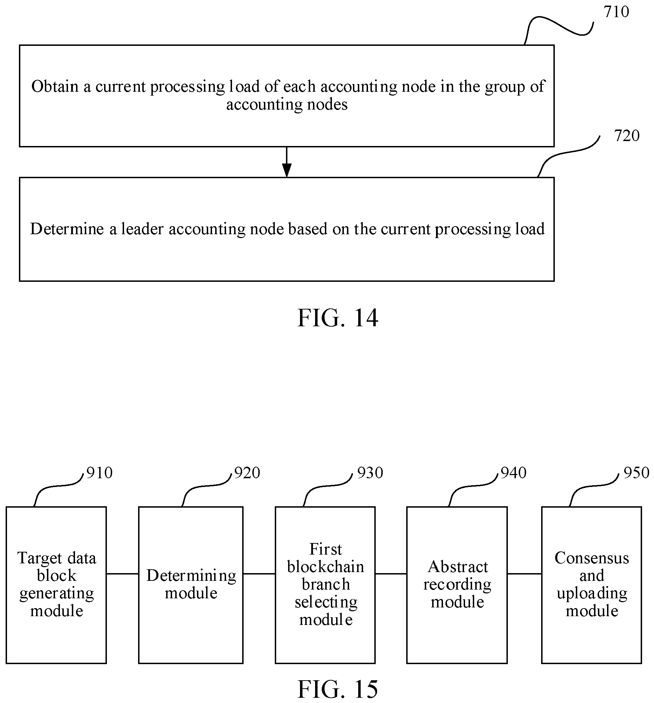

In an embodiment, as shown in FIG. 14, the leader accounting node is selected from the group of accounting nodes in the following manner:

step 710, obtaining a current processing load of each accounting node in the group of accounting nodes; and

step 720, determining a leader accounting node based on the current processing load.

In this embodiment, the leader accounting node is not fixed, and the leader accounting node may be determined according to a processing load of each accounting node, thereby achieving an effect of balancing the processing loads of the accounting nodes.

The processing load indicates a task amount being processed by a node, which may be represented by the number of tasks being processed by the node. In step 710, the current processing load of each accounting node in the group of accounting nodes may be obtained in an active reporting manner of each accounting node or a passive querying manner.

In an embodiment adopting the active reporting manner, step 710 includes:

receiving a real-time processing load periodically broadcast by each accounting node in the group of accounting nodes; and

determining the received real-time processing load broadcast by each accounting node most recently as the current processing load of the accounting node.

The real-time processing load refers to a processing load that a node is broadcasting.

In order to obtain the current processing load of each accounting node in the group of accounting nodes, the received and thus stored real-time processing load broadcast by each accounting node most recently is searched and is used as the current processing load of the accounting node. For example, an accounting node broadcasts a real-time processing load to other accounting nodes in the group of accounting nodes at an interval of three seconds. If the real-time processing load broadcast by the accounting node is received at 12:37:31, it is required to determine a current processing load of the accounting node at 12:37:33, and it is determined that the time that the real-time processing load broadcast by the accounting node is received most recently is at 12:37:31, the real-time processing load broadcast at 12:37:31 is used as the current processing load of the accounting node.

In this embodiment, the active reporting manner has the advantage of reducing processing overheads for querying of the leader accounting node.

In an embodiment adopting a passive querying manner, step 710 includes:

transmitting a current processing load query request to each accounting node in the group of accounting nodes; and

receiving a current processing load from each accounting node.

In this embodiment, the passive querying manner has the advantage that the query is performed only when it is required to determine a current processing load of an accounting node, and the queried current processing load is determined as a real-time load at a time when it is required to determine the current processing load of the accounting node, thereby improving the accuracy of determining the current processing load of the accounting node.

In an embodiment, step 720 includes:
determining an accounting node with the smallest current processing load as the leader accounting node.

The accounting node with the smallest processing load may have the least workload. The accounting node with the smallest processing load is selected as the leader accounting node, such that the workload of the accounting nodes can be balanced.

In another embodiment, step 720 includes:
selecting any one of accounting nodes each of which a current processing load is less than a predetermined processing load threshold as the leader accounting node.

In this embodiment, as long as an accounting node has a current processing load that is less than a predetermined processing load threshold, the accounting node may be selected as the leader accounting node. This embodiment has the advantage of preventing congestion of the accounting node with the smallest processing load due to a case that only the accounting node with the smallest processing load is selected.

As shown in FIG. 15, according to an embodiment of the present disclosure, a leader accounting node for blockchain recording is provided, the blockchain including multiple blockchain branches, data blocks are recorded on the multiple blockchain branches by a same group of accounting nodes, the leader accounting node is selected from the group of accounting nodes, the leader accounting node includes: a target data block generating module 910, a determining module 920, a first blockchain branch selecting module 930, an abstract recording module 940, and a consensus and uploading module 950. The target data block generating module 910 is configured to generate a target data block. The determining module 920 is configured to determine whether there is a blockchain branch having a data block on which consensus is being performed and which is to be uploaded in the multiple blockchain branches. The first blockchain branch selecting module 930 is configured to, in a case that there are blockchain branches each having no data block on which consensus is being performed and which is to be uploaded, select, from the blockchain branches each having no data block on which consensus is being performed and which is to be uploaded, a blockchain branch for recording the target data block. The abstract recording module 940 is configured to record an abstract of a previous data block recorded on the selected blockchain branch in a block header of the target data block. The consensus and uploading module 950 is configured to transmit the target data block to other accounting nodes in the group of accounting nodes for performing consensus, and record the target data block on the selected blockchain branch.

In an embodiment, the leader accounting node further includes a second blockchain branch selecting module. The second blockchain branch selecting module is configured to, in a case that the multiple blockchain branches each has a data block on which consensus is being performed and which is to be uploaded, wait until the consensus on the data block of each of the multiple blockchain branches is completed, and select a blockchain branch having a data block on which consensus is completed first as the blockchain branch for recording the target data block.

In an embodiment, each of the multiple blockchain branches has a sequence number. The first blockchain branch selecting module 930 is further configured to:

determine first blockchain branches from the blockchain branches each having no data block on which consensus is being performed and which is to be uploaded, where the sequence number of each of the first blockchain branches is greater than the sequence number of a second blockchain branch, and the second blockchain branch is a blockchain branch on which the previous data block of the target data block is recorded;

select, from the first blockchain branches, a blockchain branch with a smallest sequence number as the blockchain branch for recording the target data block; and

in a case that none of the blockchain branches each having no data block on which consensus is being performed and which is to be uploaded has a sequence number greater than the sequence number of the second blockchain branch, select, from the blockchain branches each having no data block on which consensus is being performed and which is to be uploaded, a blockchain branch with the smallest sequence number as the blockchain branch for recording the target data block.

In an embodiment, the first blockchain branch selecting module 930 is further configured to:

determine the number of data blocks recorded on each of the blockchain branches each having no data block on which consensus is performed and which is to be uploaded;

determine a time difference between a current time and a recording time of a last data block on each of the blockchain branches each having no data block on which consensus is being performed and which is to be uploaded; and

select, based on the number of the recorded data blocks and the time difference and from the blockchain branches each having no data block on which consensus is being performed and which is to be uploaded, the blockchain branch for recording the target data block.

In an embodiment, the selecting, based on the number of the recorded data blocks and the time difference and from the blockchain branches having no data block on which consensus is being performed and which is to be uploaded, the blockchain branch for recording the target data block includes:

determining a first score for the number of the data blocks recorded on each of the blockchain branches each having no data block on which consensus is being performed and which is to be uploaded;

determining a second score for the time difference for each of the blockchain branches each having no data block on which consensus is being performed and which is to be uploaded; and

determining, based on a weighted sum of the first score and the second score, the blockchain branch for recording the target data block.

In an embodiment, each of the multiple blockchain branches has an identifier. The abstract recording module 940 is further configured to: record the abstract of the previous data block that is recorded on the selected blockchain branch and the identifier of the selected blockchain branch in the block header of the target data block. The consensus and uploading module 950 is further configured to:

transmit the target data block to the other accounting nodes in the group of accounting nodes;

receive a verification result for the target data block from each of the other accounting nodes; and

in a case of determining that verification succeeds based on the verification result, record the target data block on the selected blockchain branch, and notify the other accounting nodes in the group of accounting nodes of the recording of the target data block on the selected blockchain branch, where the other accounting nodes each records the target data block on the selected blockchain branch based on the identifier of the blockchain branch that is recorded in the block header.

In an embodiment, transaction information in the target data block has an input and an output, the input is linked to an output of transaction information in another data block recorded on the blockchain earlier that the target data block. The verification result for the target data block from each of the other accounting nodes is generated by the consensus and uploading module 950 in the following manner:

determining whether the output to which the input of the transaction information in the target data block is linked is already linked to an input of transaction information in a data block recorded on the blockchain before the target data block is recorded on the blockchain;

determining that the verification result indicates that verification is not passed in a case that the output to which the input of the transaction information in the target data block is linked is already linked to the input of the transaction information in the data block recorded on the blockchain before the target data block is recorded on the blockchain; and

determining that the verification result indicates that verification is passed in a case that the output to which the input of the transaction information in the target data block is linked is not linked to the input of the transaction information in the data block recorded on the blockchain when the target data block is recorded on the blockchain.

In an embodiment, the consensus and uploading module 950 is further configured to:
traverse inputs of transaction information in data blocks recorded on the blockchain from a time at which the previous data block is recorded on the blockchain to a time at which the target data block is recorded on the blockchain, and determine, one by one, whether each of the inputs is linked to an output of corresponding transaction information in a previous data block.
In an embodiment, the consensus and uploading module 950 is further configured to:

query an occupancy state word corresponding to the output of the transaction information in the previous data block to which the input of the transaction information in the target data block is linked;

determine that the verification result indicates that verification is not passed in a case that the occupancy state word indicates an occupied state;

determine that the verification result indicates that verification is passed in a case that the occupancy state word indicates an unoccupied state;

set an occupancy state word corresponding to the output of the transaction information in the target data block to indicate an unoccupied state; and

set the occupancy state word corresponding to the output of the transaction information in the previous data block to which the input of the transaction information in the target data block is linked to indicate an occupied state.

In an embodiment, the abstract recording module 940 is further configured to record the abstract of the previous data block that is recorded on the selected blockchain branch and a signature formed by encrypting the abstract by using a private key specific to the leader accounting node in the block header of the target data block. The verification result for the target data block from each of the other accounting nodes is generated in the following manner:

decrypting the signature by using a public key specific to the leader accounting node;

comparing a result of the decryption with the abstract in the block header;

determining that the verification result indicates that verification is passed in a case that the result of the decryption is identical to the abstract in the block header; and

determining that the verification result indicates that verification is not passed in a case that the result of the decryption is different from the abstract in the block header.

In an embodiment, each piece of transaction information in the target data block is encrypted by a generator node of the transaction information by using a private key specific to the generator node to form a signature, and the signature is recorded in the target data block together with the transaction information. The verification result for the target data block from each of the other accounting nodes is generated by the consensus and uploading module 950 in the following manner:

decrypting a signature of each piece of transaction information in the target data block by using a public key specific to the generator node;

acquiring an abstract for each piece of transaction information in the target data block;

comparing a result of the decryption with an abstract of corresponding transaction information in the target data block;

determining that the verification result indicates that verification is passed in a case that the result of the decryption for each piece of transaction information is identical to the abstract of the corresponding transaction information; and

determining that the verification result indicates that verification is not passed in a case that the result of the decryption for each piece of transaction information is different from the abstract of the corresponding transaction information.

In an embodiment, the multiple blockchain branches are arranged in an M-dimensional matrix, M is a positive integer greater than 1, an identifier of each of the blockchain branches is indicated by a vector of one of M elements, and each of the M elements represents a sequence number of the blockchain branch in a corresponding dimension.

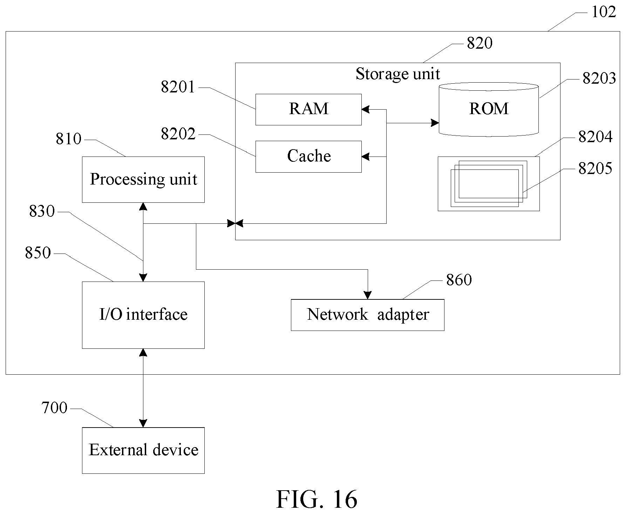

The method for recording a data block in a blockchain network according to the embodiments of the present disclosure may be implemented by the leader accounting node 102 of FIG. 16. The leader accounting node 102 according to this embodiment of the present disclosure is described below with reference to FIG. 16. The leader accounting node 102 shown in FIG. 16 is only an example, which does not impose any limitation on the functions and scope of use of the embodiments of the present disclosure.

As shown in FIG. 16, the leader accounting node 102 is represented in a form of a general-purpose computing device. Components of the leader accounting node 102 may include, but are not limited to, at least one processing unit 810, at least one storage unit 820, and a bus 830 connected to different system components (including the storage unit 820 and the processing unit 810).

The storage unit stores program codes, and the program codes may be executed by the processing unit 810, so that the processing unit 810 performs the steps according to various exemplary embodiments of the present disclosure described in the descriptions of the foregoing exemplary methods of the specification. For example, the processing unit 810 may perform the steps shown in FIG. 9.

The storage unit 820 may include a readable medium in the form of a volatile storage unit, for example, a random access memory (RAM) unit 8201 and/or a cache storage unit 8202, and may further include a read-only memory (ROM) unit 8203.

The storage unit 820 may further include a program/utility tool 8204 having a group of (one or more) program modules 8205. The program module 8205 includes, but is not limited to, an operating system, one or more application programs, other program modules, and program data. Each or a combination of these examples may include implementation of a network environment.

The bus 830 may indicate one or more of several types of bus structures, including a storage unit bus or storage unit controller, a peripheral bus, an accelerated graphics port, a processing unit, or a local bus using any of multiple bus structures.

The leader accounting node 102 may communicate with one or more external devices 700 (for example, a keyboard, a pointing device, and a Bluetooth device), or may communicate with one or more devices that enable a user to interact with the leader accounting node 102 and/or communicate with any device (for example, a router or a modem) that enables the leader accounting node 102 to communicate with one or more other computing devices. Such communication may be performed by using an input/output (I/O) interface 650. In addition, the leader accounting node 102 may further communicate with one or more networks (for example, a local area network (LAN), a wide area network (WAN), and/or a public network such as the Internet) through a network adapter 860. As shown in Figure 16, the network adapter 860 communicates with other modules of the leader accounting node 102 by using the bus 830. It is to be understood that although not shown in Figure 16, other hardware and/or software modules may be used in combination with the leader accounting node 102, which include, but not limited to, microcode, a device driver, a redundancy processing unit, an external disk drive array, a RAID system, a tape driver, a data backup and storage system, and the like.

According to the foregoing descriptions of the embodiments, a person skilled in the art may readily understand that the exemplary embodiments described herein may be implemented by using software, or may be implemented by combining software and necessary hardware. Therefore, the technical solutions of the embodiments of the present disclosure may be implemented in the form of a software product. The software product may be stored in a non-volatile storage medium (which may be a CD-ROM, a USB flash driver, a removable hard disk, or the like) or in a network and includes several instructions for instructing a computer device (which may be a personal computer, a server, a terminal device, a network device, or the like) to perform the methods described in the embodiments of the present disclosure.

In the exemplary embodiments of the present disclosure, a computer program medium is further provided, on which computer-readable instructions are stored. The computer-readable instructions, when executed by a processor of a computer, cause the computer to perform the methods according to the method embodiments.

According to an embodiment of the present disclosure, a program product for implementing the methods in the foregoing method embodiments is further provided. The program product may use a portable compact disc read-only memory (CD-ROM) and include program codes, and may be run on a terminal device such as a personal computer. However, the program product in the present disclosure is not limited thereto. In this specification, the readable storage medium may be any tangible medium including or storing a program, and the program may be used by or used in combination with an instruction execution system, an apparatus, or a device.

The program product may be any combination of one or more readable mediums. The readable medium may be a computer-readable signal medium or a computer-readable storage medium. The readable storage medium may be, for example, but is not limited to, an electric, magnetic, optical, electromagnetic, infrared, or semi-conductive system, apparatus, or device, or any combination thereof. More specific examples of the readable storage medium (a non-exhaustive list) include: an electrical connection having one or more wires, a portable disk, a hard disk, a RAM, a ROM, an erasable programmable ROM (EPROM or a flash memory), an optical fiber, a compact disc ROM (CD-ROM), an optical storage device, a magnetic storage device, or any appropriate combination thereof.

The computer-readable signal medium may include a data signal in a baseband or propagated as a part of a carrier, which carries readable program codes. A data signal propagated in such a way may be in multiple forms, which includes, but is not limited to, an electromagnetic signal, an optical signal, or any appropriate combination thereof. The readable storage medium may also be any readable medium other than a readable storage medium, and the readable storage medium may be used to transmit, propagate, or transmit a program used by or in combination with an instruction execution system, apparatus, or device.

The program code included in the readable storage medium may be transmitted by using any suitable medium, which includes, but is not limited to, a wireless medium, a wired medium, an optical cable, RF, or any appropriate combination thereof.

According to an embodiment of the present disclosure, a computer program product including instructions is further provided. The computer program product, when run on a server, causes the server to perform the method according to the foregoing embodiments.

The program code used for executing the operations of the present disclosure may be written by using one or more programming languages or a combination thereof. The programming languages include an object-oriented programming language such as Java and C++, and also include a conventional procedural programming language such as "C" or similar programming languages. The program code may be completely executed on a user computing device, partially executed on a user device, executed as an independent software package, partially executed on a user computing device and partially executed on a remote computing device, or completely executed on a remote computing device or server. In cases involving a remote computing device, the remote computing device may be connected to a user computing device through any type of network including a local area network (LAN) or a wide area network (WAN), or may be connected to an external computing device (for example, through the Internet by using an Internet service provider).

It is to be noted that although multiple modules or units of a device configured to perform operations are described in the foregoing detailed description, such division is not mandatory. In practice, according to the embodiments of the present disclosure, the features and functions of two or more modules or units described above may be embodied in one module or unit. Further, the features and functions of one module or unit described above may be further divided to be embodied by multiple modules or units.

In addition, although the steps of the method in the present disclosure are described in the drawings in a specific sequence, this does not require or imply that such steps need to be performed according to the specific sequence, or an expected result can only be realized by performing all shown steps. Additionally, or alternatively, some steps may be omitted, multiple steps may be combined into one step, and/or one step may be decomposed into multiple steps, and the like.

According to the foregoing descriptions of the embodiments, a person skilled in the art may readily understand that the exemplary embodiments described herein may be implemented by using software, or may be implemented by combining software and necessary hardware. Therefore, the technical solutions of the embodiments of the present disclosure may be implemented in the form of a software product. The software product may be stored in a non-volatile storage medium (which may be a CD-ROM, a USB flash drive, a removable hard disk, or the like) or in a network and includes several instructions for instructing a computing device (which may be a personal computer, a server, a mobile terminal, a network device, or the like) to perform the methods described in the implementations of the present disclosure.

After considering the specification and practicing the present disclosure, a person skilled in the art can easily conceive of other implementations of the present disclosure. This application is intended to cover any variation, use, or adaptive change of the present disclosure falling under the scope of the appended claims. These variations, uses, or adaptive changes should follow the general principles of the present disclosure and include common general knowledge or common technical means, which are not described in the present disclosure, in the technology.

**Claims**

1. A method for recording a data block on a blockchain, wherein the blockchain comprises a plurality of blockchain branches, data blocks are recorded on the plurality of blockchain branches by a same group of accounting nodes, the method is performed by a leader accounting node in the group of accounting nodes, and the method comprises:

generating a target data block;
determining, in the plurality of blockchain branches, whether there is a blockchain branch having a data block on which consensus is being performed and which is to be uploaded;
in a case that there are blockchain branches each having no data block on which consensus is being performed and which is to be uploaded, selecting, from the blockchain branches each having no data block on which consensus is being performed and which is to be uploaded, a blockchain branch for recording the target data block;
recording an abstract of a previous data block that is recorded on the selected blockchain branch in a block header of the target data block; and
transmitting the target data block to other accounting nodes in the group of accounting nodes for performing consensus, and recording the target data block on the selected blockchain branch.

2. The method according to claim 1, wherein after the determining, in the plurality of blockchain branches, whether there is a blockchain branch having a data block on which consensus is being performed and which is to be uploaded, the method further comprises:
in a case that the plurality of blockchain branches each has a data block on which consensus is being performed and which is to be uploaded, waiting until the consensus on the data block of each of the plurality of blockchain branches is completed, and selecting a blockchain branch having a data block on which consensus is completed first as the blockchain branch for recording the target data block.

3. The method according to claim 1, wherein each of the plurality of blockchain branches has a sequence number, and the selecting, from the blockchain branches each having no data block on which consensus is being performed and which is to be uploaded, a blockchain branch for recording the target data block comprises:

determining first blockchain branches from the blockchain branches each having no data block on which consensus is being performed and which is to be uploaded, wherein the sequence number of each of the first blockchain branches is greater than the sequence number of a second blockchain branch, and the second blockchain branch is a blockchain branch on which the previous data block of the target data block is recorded;
selecting, from the first blockchain branches, a blockchain branch with a smallest sequence number as the blockchain branch for recording the target data block; and
in a case that none of the blockchain branches each having no data block on which consensus is being performed and which is to be uploaded has a sequence number greater than the sequence number of the second blockchain branch, selecting, from the blockchain branches each having no data block on which consensus is being performed and which is to be uploaded, a blockchain branch with a smallest sequence number as the blockchain branch for recording the target data block.

4. The method according to claim 1, wherein the selecting, from the blockchain branches each having no data block on which consensus is being performed and which is to be uploaded, a blockchain branch for recording the target data block comprises:

determining a number of data blocks recorded on each of the blockchain branches each having no data block on which consensus is being performed and which is to be uploaded;
determining a time difference between a current time and a recording time of a last data block on each of the blockchain branches each having no data block on which consensus is being performed and which is to be uploaded; and
selecting, based on the number of the recorded data blocks and the time difference and from the blockchain branches each having no data block on which consensus is being performed and which is to be uploaded, the blockchain branch for recording the target data block.

5. The method according to claim 4, wherein the selecting, based on the number of the recorded data blocks and the time difference and from the blockchain branches having no data block on which consensus is being performed and which is to be uploaded, the blockchain branch for recording the target data block comprises:

determining a first score for the number of the data blocks recorded on each of the blockchain branches each having no data block on which consensus is being performed and which is to be uploaded;

determining a second score for the time difference for each of the blockchain branches each having no data block on which consensus is being performed and which is to be uploaded; and

determining, based on a weighted sum of the first score and the second score, the blockchain branch for recording the target data block.

6. The method according to claim 1, wherein each of the plurality of blockchain branches has an identifier,

the recording an abstract of a previous data block that is recorded on the selected blockchain branch in a block header of the target data block comprises:

recording the abstract of the previous data block that is recorded on the selected blockchain branch and the identifier of the selected blockchain branch in the block header of the target data block; and

the transmitting the target data block to other accounting nodes in the group of accounting nodes for performing consensus, and recording the target data block on the selected blockchain branch comprises:

transmitting the target data block to the other accounting nodes in the group of accounting nodes;

receiving a verification result for the target data block from each of the other accounting nodes; and

in a case of determining that verification succeeds based on the verification result, recording the target data block on the selected blockchain branch, and notifying the other accounting nodes in the group of accounting nodes of the recording of the target data block on the selected blockchain branch, wherein the other accounting nodes each records the target data block on the selected blockchain branch based on the identifier of the blockchain branch that is recorded in the block header.

7. The method according to claim 6, wherein transaction information in the target data block comprises an input and an output, the input is linked to an output of transaction information in a previous data block of the target data block that is recorded on the blockchain, and

the verification result for the target data block from each of the other accounting nodes is generated in the following manner:

determining whether the output to which the input of the transaction information in the target data block is linked is already linked to an input of transaction information in a data block recorded on the blockchain before the target data block is recorded on the blockchain;

determining that the verification result indicates that verification is not passed in a case that the output to which the input of the transaction information in the target data block is linked is already linked to the input of the transaction information in the data block recorded on the blockchain before the target data block is recorded on the blockchain; and

determining that the verification result indicates that verification is passed in a case that the output to which the input of the transaction information in the target data block is linked is not linked to the input of the transaction information in the data block recorded on the blockchain when the target data block is recorded on the blockchain.

8. The method according to claim 7, wherein the determining whether the output to which the input of the transaction information in the target data block is linked is already linked to an input of transaction information in a data block recorded on the blockchain before the target data block is recorded on the blockchain comprises:

traversing inputs of transaction information in data blocks recorded on the blockchain from a time at which the previous data block is recorded on the blockchain to a time at which the target data block is recorded on the blockchain, and determining, one by one, whether each of the inputs is linked to an output of corresponding transaction information in a previous data block.

9. The method according to claim 7, wherein

the determining whether the output to which the input of the transaction information in the target data block is linked is already linked to an input of transaction information in a data block recorded on the blockchain before the target data block is recorded on the blockchain comprises:

querying an occupancy state word corresponding to the output of the transaction information in the previous data block to which the input of the transaction information in the target data block is linked;

determining that the verification result indicates that verification is not passed in a case that the occupancy state word indicates an occupied state; and

determining that the verification result indicates that verification is passed in a case that the occupancy state word indicates an unoccupied state; and

after the transmitting the target data block to other accounting nodes in the group of accounting nodes for performing consensus, and recording the target data block on the selected blockchain branch, the method further comprises:

setting an occupancy state word corresponding to the output of the transaction information in the target data block to indicate an unoccupied state; and

setting the occupancy state word corresponding to the output of the transaction information in the previous data block to which the input of the transaction information in the target data block is linked to indicate an occupied state.

10. The method according to claim 6, wherein the recording an abstract of a previous data block that is recorded on the selected blockchain branch in a block header of the target data block comprises: recording the abstract of the previous data block that is recorded on the selected blockchain branch and a signature formed by encrypting the abstract by using a private key specific to the leader accounting node in the block header of the target data block; and the verification result for the target data block from each of the other accounting nodes is generated in the following manner:

decrypting the signature by using a public key specific to the leader accounting node;

comparing a result of the decryption with the abstract in the block header;

determining that the verification result indicates that verification is passed in a case that the result of the decryption is identical to the abstract in the block header; and

determining that the verification result indicates that verification is not passed in a case that the result of the decryption is different from the abstract in the block header.

11. The method according to claim 1, wherein transaction information in the target data block is encrypted by a generator node of the transaction information by using a private key specific to the generator node to form a signature, and the signature is recorded in the target data block together with the transaction information; and

a verification result for the target data block from each of the other accounting nodes is generated in the following manner:

decrypting a signature of each piece of transaction information in the target data block by using a public key specific to the generator node;

acquiring an abstract for each piece of transaction information in the target data block; and

comparing a result of the decryption with an abstract of corresponding transaction information in the target data block;

determining that the verification result indicates that verification is passed in a case that the result of the decryption for each piece of transaction information is identical to the abstract of the corresponding transaction information; and

determining that the verification result indicates that verification is not passed in a case that the result of the decryption for each piece of transaction information is different from the abstract of the corresponding transaction information.

12. The method according to claim 1, wherein the plurality of blockchain branches are arranged in an M-dimensional matrix, M is a positive integer greater than 1, an identifier of each of the blockchain branches is indicated by a vector of one of M elements, and each of the M elements represents a sequence number of a corresponding blockchain branch in a corresponding dimension.

13. A leader accounting node, comprising:

a memory, configured to store computer-readable instructions; and

a processor, configured to read the computer-readable instructions stored in the memory to perform the method according to any one of claims 1 to 12.

14. A computer program medium comprising computer-readable instructions stored thereon, the computer-readable instructions, when executed by a processor of a computer, causing the computer to perform the method according to any one of claims 1 to 12.

**15.** A computer program product comprising instructions, the computer program product, when run on a computer, causing the computer to perform the method according to any one of claims 1 to 12.


**Patentansprüche**

**1.** Verfahren zum Aufzeichnen eines Datenblocks auf einer Blockchain, wobei die Blockchain eine Vielzahl von Blockchain-Zweigen aufweist, Datenblöcke auf der Vielzahl von Blockchain-Zweige durch dieselbe Gruppe von Abrechnungsknoten aufgezeichnet werden, das Verfahren von einem führenden Abrechnungsknoten in der Gruppe von Abrechnungsknoten durchgeführt wird, und das Verfahren aufweist:

- Erzeugen eines Zieldatenblocks;
- Bestimmen, in der Vielzahl von Blockchain-Zweigen, ob es einen Blockchain-Zweig gibt, der einen Datenblock hat, an dem ein Konsens durchgeführt wird und der hochgeladen werden soll;
- für den Fall, dass es Blockchain-Zweige gibt, die jeweils keinen Datenblock haben, an dem ein Konsens durchgeführt wird und der hochgeladen werden soll, Auswählen aus den Blockchain-Zweigen, die jeweils keinen Datenblock haben, an dem ein Konsens durchgeführt wird und der hochgeladen werden soll, eines Blockchain-Zweigs zum Aufzeichnen des Zieldatenblocks;
- Aufzeichnen einer Zusammenfassung eines vorherigen Datenblocks, der auf dem ausgewählten Blockchain-Zweig in einem Block-Header des Zieldatenblocks aufgezeichnet ist; und
- Übertragen des Zieldatenblocks an andere Abrechnungsknoten in der Gruppe von Abrechnungsknoten zur Durchführung eines Konsenses und Aufzeichnen des Zieldatenblocks auf dem ausgewählten Blockchain-Zweig.

**2.** Verfahren nach Anspruch 1, wobei das Verfahren nach dem Bestimmen, ob es in der Vielzahl von Blockchain-Zweigen einen Blockchain-Zweig gibt, der einen Datenblock hat, an dem Konsens durchgeführt wird und der hochgeladen werden soll, weiterhin aufweist:

- für den Fall, dass die mehreren Blockchain-Zweige jeweils einen Datenblock haben, auf dem ein Konsens durchgeführt wird und der hochgeladen werden soll, Warten, bis der Konsens an dem Datenblock jedes der mehreren Blockchain-Zweige abgeschlossen ist, und Auswählen eines Blockchain-Zweigs mit einem Datenblock, bei dem die Konsensbildung zuerst abgeschlossen ist, als Blockchain-Zweig zum Aufzeichnen des Zieldatenblocks.

**3.** Verfahren nach Anspruch 1, wobei jeder der mehreren Blockchain-Zweige eine Sequenznummer hat, und das Auswählen eines Blockchain-Zweigs, aus den Blockchain-Zweigen, die jeweils keinen Datenblock haben, an dem ein Konsens durchgeführt wird und der hochgeladen werden soll, zum Aufzeichnen des Zieldatenblocks aufweist:

- Bestimmen erster Blockchain-Zweige aus den Blockchain-Zweigen, die jeweils keinen Datenblock haben, an dem ein Konsens durchgeführt wird und der hochgeladen werden soll, wobei die Sequenznummer jedes der ersten Blockchain-Zweige größer ist als die Sequenznummer eines zweiten Blockchain-Zweigs, und der zweite Blockchain-Zweig ein Blockchain-Zweig ist, auf dem der vorherige Datenblock des Zieldatenblocks aufgezeichnet ist;
- Auswählen eines Blockchain-Zweigs mit einer kleinsten Sequenznummer, aus den ersten Blockchain-Zweigen, als den Blockchain-Zweig zum Aufzeichnen des Zieldatenblocks; und
- für den Fall, dass keiner der Blockchain-Zweige, die jeweils keinen Datenblock haben, an dem der Konsens durchgeführt wird und der hochgeladen werden soll, eine Sequenznummer hat, die größer ist als die Sequenznummer des zweiten Blockchain-Zweigs, Auswählen eines Blockchain-Zweigs mit einer kleinsten Sequenznummer, aus den Blockchain-Zweigen, die jeweils keinen Datenblock haben, an dem ein Konsens durchgeführt wird und der hochgeladen werden soll, als den Blockchain-Zweig für die Aufzeichnung des Zieldatenblocks.

**4.** Verfahren nach Anspruch 1, wobei das Auswählen eines Blockchain-Zweigs zum Aufzeichnen des Zieldatenblocks aus den Blockchain-Zweigen, die jeweils keinen Datenblock aufweisen, an dem ein Konsens durchgeführt wird und der hochgeladen werden soll, aufweist:

- Bestimmen einer Anzahl von Datenblöcken, die auf jedem der Blockchain-Zweige aufgezeichnet sind, die jeweils keinen Datenblock aufweisen, an dem ein Konsens durchgeführt wird und der hochgeladen werden soll;
- Bestimmen einer Zeitdifferenz zwischen einer aktuellen Zeit und einer Aufzeichnungszeit eines letzten Datenblocks auf jedem der Blockchain-Zweige, die jeweils keinen Datenblock haben, an dem ein Konsens durchgeführt wird und der hochgeladen werden soll; und
- Auswählen, basierend auf der Anzahl der aufgezeichneten Datenblöcke und der Zeitdifferenz und aus den Blockchain-Zweigen, die jeweils keinen Datenblock haben, an dem ein Konsens durchgeführt wird und der hochgeladen werden soll, den Blockchain-Zweig für die Aufzeichnung des Zieldatenblocks.

5. Verfahren nach Anspruch 4, wobei das Auswählen des Blockchain-Zweigs zum Aufzeichnen des Zieldatenblocks auf Basis der Anzahl der aufgezeichneten Datenblöcke und der Zeitdifferenz und aus den Blockchain-Zweigen, die keinen Datenblock haben, an dem ein Konsens durchgeführt wird und der hochgeladen werden soll, aufweist:

   - Bestimmen eines ersten Ergebnisses für die Anzahl der Datenblöcke, die auf jedem der Blockchain-Zweige aufgezeichnet sind, die keinen Datenblock haben, an dem ein Konsens durchgeführt wird und der hochgeladen werden soll;
   - Bestimmen eines zweiten Ergebnisses für die Zeitdifferenz für jeden der Blockchain-Zweige, die jeweils keinen Datenblock haben, an dem ein Konsens durchgeführt wird und der hochgeladen werden soll; und
   - Bestimmen des Blockchain-Zweiges für die Aufzeichnung des Zieldatenblocks auf Basis einer gewichteten Summe aus dem ersten Ergebnis und dem zweiten Ergebnis.

6. Verfahren nach Anspruch 1, wobei jeder der Vielzahl von Blockchain-Zweigen einen Identifikator hat,

   das Aufzeichnen einer Zusammenfassung eines vorherigen Datenblocks, der auf dem ausgewählten Blockchain-Zweig aufgezeichnet ist, in einem Block-Header des Zieldatenblocks aufweist:

      - Aufzeichnen der Zusammenfassung des vorherigen Daten blocks, der auf dem ausgewählten Blockchain-Zweig aufgezeichnet ist, und des Identifikators des ausgewählten Blockchain-Zweigs in dem Block-Header des Zieldatenblocks; und

   das Übertragen des Zieldatenblocks an andere Abrechnungsknoten in der Gruppe von Abrechnungsknoten zum Durchführen eines Konsenses und das Aufzeichnen des Zieldatenblocks auf dem ausgewählten Blockchain-Zweig aufweist:

      - Übertragen des Zieldatenblocks an die anderen Abrechnungsknoten in der Gruppe von Abrechnungsknoten;
      - Empfangen eines Verifizierungsergebnisses für den Zieldatenblock von jedem der anderen Abrechnungsknoten; und
      - für den Fall der Feststellung, dass die Verifizierung auf der Grundlage des Verifizierungsergebnisses erfolgreich war, Aufzeichnen des Zieldatenblocks auf dem ausgewählten Blockchain-Zweig und Benachrichtigen der anderen Abrechnungsknoten in der Gruppe von Abrechnungsknoten über die Aufzeichnung des Zieldatenblocks auf dem ausgewählten Blockchain-Zweig, wobei die anderen Abrechnungsknoten jeweils den Zieldatenblock auf dem ausgewählten Blockchain-Zweig auf Basis des Identifikators des Blockchain-Zweigs, der in dem Block-Header aufgezeichnet ist, aufzeichnen.

7. Verfahren nach Anspruch 6, wobei Transaktionsinformationen in dem Zieldatenblock eine Eingabe und eine Ausgabe umfassen, wobei die Eingabe mit einer Ausgabe von Transaktionsinformationen in einem vorherigen Datenblock des Zieldatenblocks, der auf der Blockchain aufgezeichnet ist, verknüpft ist, und
   das Verifizierungsergebnis für den Zieldatenblock von jedem der anderen Abrechnungsknoten auf die folgende Weise erzeugt wird:

      - Bestimmen, ob die Ausgabe, mit der die Eingabe der Transaktionsinformationen in dem Zieldatenblock verknüpft ist, bereits mit einer Eingabe von Transaktionsinformationen in einem Datenblock verknüpft ist, der auf der Blockchain aufgezeichnet ist, bevor der Zieldatenblock auf der Blockchain aufgezeichnet wird;
      - Bestimmen, dass das Verifizierungsergebnis anzeigt, dass die Verifizierung nicht bestanden wurde für den Fall, dass die Ausgabe, mit der die Eingabe der Transaktionsinformationen in dem Zieldatenblock verknüpft ist, bereits mit der Eingabe der Transaktionsinformationen in dem Datenblock verknüpft ist, der auf der Blockchain aufgezeichnet ist, bevor der Zieldatenblock auf der Blockchain aufgezeichnet wird; und

- Bestimmen, dass das Verifizierungsergebnis anzeigt, dass die Verifizierung bestanden wurde für den Fall, dass die Ausgabe, mit der die Eingabe der Transaktionsinformationen in dem Zieldatenblock verknüpft ist, nicht mit der Eingabe der Transaktionsinformationen in dem Datenblock verknüpft ist, der auf der Blockchain aufgezeichnet ist, wenn der Zieldatenblock auf der Blockchain aufgezeichnet wird.

8. Verfahren nach Anspruch 7, wobei das Bestimmen, ob die Ausgabe, mit der die Eingabe der Transaktionsinformationen im Zieldatenblock verknüpft ist, bereits mit einer Eingabe von Transaktionsinformationen in einem auf der Blockchain aufgezeichneten Datenblock verknüpft ist, bevor der Zieldatenblock auf der Blockchain aufgezeichnet wird, aufweist:

- Durchlaufen von Eingaben von Transaktionsinformationen in Datenblöcken, die auf der Blockchain aufgezeichnet sind von einem Zeitpunkt, zu dem der vorhergehende Datenblock auf der Blockchain aufgezeichnet wird, bis zu einem Zeitpunkt, zu dem der Zieldatenblock auf der Blockchain aufgezeichnet ist, und nacheinander Bestimmen, ob jede der Eingaben mit einer Ausgabe von entsprechenden Transaktionsinformationen in einem vorhergehenden Datenblock verknüpft ist.

9. Verfahren nach Anspruch 7, wobei

das Bestimmen, ob die Ausgabe, mit der die Eingabe der Transaktionsinformationen im Zieldatenblock verknüpft ist, bereits mit einer Eingabe von Transaktionsinformationen in einem Datenblock verknüpft ist, der auf der Blockchain aufgezeichnet ist, bevor der Zieldatenblock auf der Blockchain aufgezeichnet wird aufweist:

- Abfragen eines Belegungszustandswortes, das der Ausgabe der Transaktionsinformationen in dem vorherigen Datenblock entspricht, mit dem die Eingabe der Transaktionsinformationen in dem Zieldatenblock verknüpft ist;
- Bestimmen, dass das Verifizierungsergebnis anzeigt, dass die Verifizierung nicht bestanden ist, für den Fall, dass das Belegungszustandswort einen belegten Zustand anzeigt; und
- Bestimmen, dass das Verifizierungsergebnis anzeigt, dass die Verifizierung bestanden ist, für den Fall, dass das Belegungszustandswort einen nicht belegten Zustand anzeigt; und

nach dem Übertragen des Zieldatenblocks an andere Abrechnungsknoten in der Gruppe von Abrechnungsknoten zum Durchführen eines Konsenses und dem Aufzeichnen des Zieldatenblocks auf dem ausgewählten Blockchain-Zweig, das Verfahren weiterhin aufweist:

- Festlegen eines Belegungszustandswortes entsprechend der Ausgabe der Transaktionsinformationen in dem Zieldatenblock, um einen unbesetzten Zustand anzuzeigen; und
- Festlegen des Belegungszustandswortes, das dem Ausgang der Transaktionsinformationen im vorherigen Datenblock entspricht, mit dem der Eingang der Transaktionsinformationen im Zieldatenblock verbunden ist, um einen belegten Zustand anzuzeigen.

10. Verfahren nach Anspruch 6, wobei das Aufzeichnen einer Zusammenfassung eines vorherigen Datenblocks, der auf dem ausgewählten Blockchain-Zweig aufgezeichnet ist, in einem Block-Header des Zieldatenblocks, aufweist:

- Aufzeichnen der Zusammenfassung des vorherigen Datenblocks, der auf dem ausgewählten Blockchain-Zweig aufgezeichnet ist, und einer Signatur, die durch Verschlüsseln der Zusammenfassung unter Verwendung eines privaten Schlüssels, der für den führenden Abrechnungsknoten spezifisch ist, in dem Block-Header des Zieldatenblocks; und

das Verifizierungsergebnis für den Zieldatenblock von jedem der anderen Abrechnungsknoten auf die folgende Weise erzeugt wird:

- Entschlüsseln der Signatur unter Verwendung eines öffentlichen Schlüssels, der für den führenden Abrechnungsknoten spezifisch ist;
- Vergleichen eines Ergebnisses der Entschlüsselung mit der Zusammenfassung in dem Block-Header;
- Bestimmen, dass das Verifizierungsergebnis anzeigt, dass die Verifizierung bestanden ist, für den Fall, dass das Ergebnis der Entschlüsselung identisch mit der Zusammenfassung in dem Block-Header ist; und
- Bestimmen, dass das Verifizierungsergebnis anzeigt, dass die Verifizierung nicht bestanden ist, für den Fall, dass sich das Ergebnis der Entschlüsselung von der Zusammenfassung in dem Block-Header unterscheidet.

**11.** Verfahren nach Anspruch 1, wobei die Transaktionsinformationen im Zieldatenblock von einem Generatorknoten der Transaktionsinformationen unter Verwendung eines für den Generatorknoten spezifischen privaten Schlüssels verschlüsselt werden, um eine Signatur zu bilden, und die Signatur in dem Zieldatenblock zusammen mit den Transaktionsinformationen aufgezeichnet wird; und

ein Verifikationsergebnis für den Zieldatenblock von jedem der anderen Abrechnungsknoten auf die folgende Weise erzeugt wird:

- Entschlüsseln einer Signatur von jedem Stück der Transaktionsinformationen im Zieldatenblock unter Verwendung eines für den Generatorknoten spezifischen öffentlichen Schlüssels;
- Erfassen einer Zusammenfassung für jedes Stück der Transaktionsinformationen im Zieldatenblock; und
- Vergleichen eines Ergebnisses der Entschlüsselung mit einer Zusammenfassung der entsprechenden Transaktionsinformation in dem Zieldatenblock;
- Bestimmen, dass das Verifizierungsergebnis anzeigt, dass die Verifizierung bestanden ist, für den Fall, dass das Ergebnis der Entschlüsselung für jedes Stück der Transaktionsinformationen identisch zu der Zusammenfassung der entsprechenden Transaktionsinformation ist; und
- Bestimmen, dass das Verifizierungsergebnis anzeigt, dass die Verifizierung nicht bestanden ist, für den Fall, dass sich das Ergebnis der Entschlüsselung für jedes Stück der Transaktionsinformationen von der Zusammenfassung der entsprechenden Transaktionsinformation unterscheidet.

**12.** Verfahren nach Anspruch 1, wobei die Vielzahl von Blockchain-Zweigen in einer M-dimensionalen Matrix angeordnet sind, M eine positive ganze Zahl größer als 1 ist, ein Identifikator von jeder der Blockchain-Zweige durch einen Vektor aus einem von M Elementen angezeigt wird und jedes der M Elemente eine Sequenznummer eines entsprechenden Blockchain-Zweiges in einer entsprechenden Dimension darstellt.

**13.** Führender Abrechnungsknoten, aufweisend:

- ein Speichermedium, das ausgebildet ist, computerlesbare Anweisungen zu speichern; und
- einen Prozessor, der ausgebildet ist, die in dem Speichermedium gespeicherten computerlesbaren Anweisungen zu lesen, um das Verfahren nach einem der Ansprüche 1 bis 12 auszuführen.

**14.** Computerlesbares Speichermedium mit darauf gespeicherten computerlesbaren Anweisungen, wobei die computerlesbaren Anweisungen, wenn sie von einem Prozessor eines Computers ausgeführt werden, den Computer dazu veranlassen, das Verfahren nach einem der Ansprüche 1 bis 12 auszuführen.

**15.** Computerprogrammprodukt, das Anweisungen enthält, wobei das Computerprogrammprodukt, wenn es auf einem Computer ausgeführt wird, den Computer dazu veranlasst, das Verfahren nach einem der Ansprüche 1 bis 12 auszuführen.

**Revendications**

**1.** Procédé d'enregistrement d'un bloc de données sur une chaîne de blocs, dans lequel la chaîne de blocs comprend une pluralité de branches de chaîne de blocs, des blocs de données sont enregistrés sur la pluralité de branches de chaîne de blocs par un même groupe de noeuds comptables, le procédé est mis en oeuvre par un noeud comptable leader dans le groupe de noeuds comptables, et le procédé comprend:

générer un bloc de données cible;
déterminer, dans la pluralité de branches de chaîne de blocs, s'il existe une branche de chaîne de blocs ayant un bloc de données sur lequel un consensus est en cours d'exécution et qui doit être téléchargé,
dans un cas où il existe des branches de chaîne de blocs n'ayant chacune aucun bloc de données sur lequel un consensus est en cours d'exécution et qui doit être téléchargé, sélectionner, parmi les branches de chaîne de blocs n'ayant chacune aucun bloc de données sur lequel un consensus est en cours d'exécution et qui doit être téléchargé, une branche de chaîne de blocs pour enregistrer le bloc de données cible;
enregistrer un résumé d'un bloc de données précédent qui est enregistré sur la branche de chaîne de blocs sélectionnée dans un en-tête de bloc du bloc de données cible; et
transmettre le bloc de données cible à d'autres noeuds comptables dans le groupe de noeuds comptables pour réaliser un consensus, et enregistrer le bloc de données cible sur la branche de chaîne de blocs sélectionnée.

2. Procédé selon la revendication 1, dans lequel après avoir déterminé, dans la pluralité de branches de chaîne de blocs, s'il existe une branche de chaîne de blocs ayant un bloc de données sur lequel un consensus est en cours d'exécution et qui doit être téléchargé, le procédé comprend en outre:

dans un cas où la pluralité de branches de chaîne de blocs a chacune un bloc de données sur lequel un consensus est en cours d'exécution et qui doit être téléchargé, attendre jusqu'à ce que le consensus sur le bloc de données de chacune de la pluralité de branches de chaîne de blocs soit achevé, et sélectionner une branche de chaîne de blocs ayant un bloc de données sur lequel un consensus est achevé en premier en tant que branche de chaîne de blocs pour enregistrer le bloc de données cible.

3. Procédé selon la revendication 1, dans lequel chacune de la pluralité de branches de chaîne de blocs a un numéro de séquence, et
la sélection, parmi les branches de chaîne de blocs n'ayant chacune aucun bloc de données sur lequel un consensus est en cours d'exécution et qui doit être téléchargé, d'une branche de chaîne de blocs pour enregistrer le bloc de données cible comprend:

déterminer des premières branches de chaîne de blocs à partir des branches de chaîne de blocs n'ayant chacune aucun bloc de données sur lequel un consensus est en cours d'exécution et qui doit être téléchargé, dans lequel le numéro de séquence de chacune des premières branches de chaîne de blocs est supérieur au numéro de séquence d'une deuxième branche de chaîne de blocs, et la deuxième branche de chaîne de blocs est une branche de chaîne de blocs sur laquelle est enregistré le bloc de données précédent du bloc de données cible;
sélectionner, parmi les premières branches de chaîne de blocs, une branche de chaîne de blocs ayant un plus petit numéro de séquence en tant que branche de chaîne de blocs pour enregistrer le bloc de données cible; et
dans un cas où aucune des branches de chaîne de blocs n'ayant chacune aucun bloc de données sur lequel un consensus est en cours d'exécution et qui doit être téléchargé n'a un numéro de séquence supérieur au numéro de séquence de la deuxième branche de chaîne de blocs, sélectionner, parmi les branches de chaîne de blocs n'ayant chacune aucun bloc de données sur lequel un consensus est en cours d'exécution et qui doit être téléchargé, une branche de chaîne de blocs ayant un plus petit numéro de séquence en tant que branche de chaîne de blocs pour enregistrer le bloc de données cible.

4. Procédé selon la revendication 1, dans lequel la sélection, parmi les branches de chaîne de blocs n'ayant chacune aucun bloc de données sur lequel un consensus est en cours d'exécution et qui doit être téléchargé, d'une branche de chaîne de blocs pour enregistrer le bloc de données cible comprend:

déterminer un nombre de blocs de données enregistrés sur chacune des branches de chaîne de blocs n'ayant chacune aucun bloc de données sur lequel un consensus est en cours d'exécution et qui doit être téléchargé;
déterminer une différence de temps entre un temps actuel et un temps d'enregistrement d'un dernier bloc de données sur chacune des branches de chaîne de blocs n'ayant chacune aucun bloc de données sur lequel un consensus est en cours d'exécution et qui doit être téléchargé; et
sélectionner la branche de chaîne de blocs pour enregistrer le bloc de données cible, sur la base du nombre de blocs de données enregistrés et de la différence de temps et parmi les branches de chaîne de blocs n'ayant chacune aucun bloc de données sur lequel un consensus est en cours d'exécution et qui doit être téléchargé.

5. Procédé selon la revendication 4, dans lequel la sélection de la branche de chaîne de blocs pour enregistrer le bloc de données cible, sur la base du nombre de blocs de données enregistrés et de la différence de temps et parmi les branches de chaîne de blocs n'ayant pas de bloc de données sur lequel un consensus est en cours d'exécution et qui doit être téléchargé, comprend:

déterminer un premier score pour le nombre des blocs de données enregistrés sur chacune des branches de chaîne de blocs n'ayant chacune aucun bloc de données sur lequel un consensus est en cours d'exécution et qui doit être téléchargé;
déterminer un deuxième score pour la différence de temps pour chacune des branches de chaîne de blocs n'ayant chacune aucun bloc de données sur lequel un consensus est en cours d'exécution et qui doit être téléchargé; et
déterminer, sur la base d'une somme pondérée du premier score et du deuxième score, la branche de chaîne de blocs pour enregistrer le bloc de données cible.

6. Procédé selon la revendication 1, dans lequel chacune de la pluralité de branches de chaîne de blocs a un identificateur,

l'enregistrement d'un résumé d'un bloc de données précédent qui est enregistré sur la branche de chaîne de blocs sélectionnée, dans un en-tête de bloc du bloc de données cible comprend:
enregistrer le résumé du bloc de données précédent qui est enregistré sur la branche de chaîne de blocs sélectionnée et l'identificateur de la branche de chaîne de blocs sélectionnée dans l'en-tête de bloc du bloc de données cible; et
la transmission du bloc de données cible à d'autres noeuds comptables dans le groupe de noeuds comptables pour réaliser un consensus, et l'enregistrement du bloc de données cible sur la branche de chaîne de blocs sélectionnée comprend:

transmettre le bloc de données cible aux autres noeuds comptables dans le groupe de noeuds comptables;
recevoir un résultat de vérification pour le bloc de données cible de chacun des autres noeuds comptables; et
dans un cas où il est déterminé que la vérification réussit sur la base du résultat de vérification, enregistrer le bloc de données cible sur la branche de chaîne de blocs sélectionnée, et notifier les autres noeuds comptables dans le groupe de noeuds comptables de l'enregistrement du bloc de données cible sur la branche de chaîne de blocs sélectionnée, dans lequel les autres noeuds comptables enregistrent chacun le bloc de données cible sur la branche de chaîne de blocs sélectionnée sur la base de l'identificateur de la branche de chaîne de blocs qui est enregistré dans l'en-tête de bloc.

7.  Procédé selon la revendication 6, dans lequel des informations de transaction dans le bloc de données cible comprennent une entrée et une sortie, dans lequel l'entrée est liée à une sortie d'informations de transaction dans un bloc de données précédent du bloc de données cible qui est enregistré sur la chaîne de blocs, et
le résultat de vérification pour le bloc de données cible de chacun des autres noeuds comptables est généré de la manière suivante:

déterminer si la sortie à laquelle l'entrée des informations de transaction dans le bloc de données cible est liée est déjà liée à une entrée d'informations de transaction dans un bloc de données enregistré sur la chaîne de blocs avant que le bloc de données cible ne soit enregistré sur la chaîne de blocs;
déterminer que le résultat de vérification indique que la vérification n'a pas réussi dans un cas où la sortie à laquelle l'entrée des informations de transaction dans le bloc de données cible est liée est déjà liée à l'entrée des informations de transaction dans le bloc de données enregistré sur la chaîne de blocs avant que le bloc de données cible ne soit enregistré sur la chaîne de blocs; et
déterminer que le résultat de vérification indique que la vérification a réussi dans un cas où la sortie à laquelle l'entrée des informations de transaction dans le bloc de données cible est liée n'est pas liée à l'entrée des informations de transaction dans le bloc de données enregistré sur la chaîne de blocs lorsque le bloc de données cible est enregistré sur la chaîne de blocs.

8.  Procédé selon la revendication 7, dans lequel la détermination si la sortie à laquelle l'entrée des informations de transaction dans le bloc de données cible est liée est déjà liée à une entrée d'informations de transaction dans un bloc de données enregistré sur la chaîne de blocs avant que le bloc de données cible ne soit enregistré sur la chaîne de blocs comprend:
traverser des entrées d'informations de transaction dans des blocs de données enregistrés sur la chaîne de blocs à partir d'un moment auquel le bloc de données précédent est enregistré sur la chaîne de blocs jusqu'à un moment auquel le bloc de données cible est enregistré sur la chaîne de blocs, et déterminer, un par un, si chacune des entrées est liée à une sortie d'informations de transaction correspondantes dans un bloc de données précédent.

9.  Procédé selon la revendication 7, dans lequel

la détermination si la sortie à laquelle l'entrée des informations de transaction dans le bloc de données cible est liée est déjà liée à une entrée d'informations de transaction dans un bloc de données enregistré sur la chaîne de blocs avant que le bloc de données cible ne soit enregistré sur la chaîne de blocs comprend:

interroger un mot d'état d'occupation correspondant à la sortie des informations de transaction dans le bloc de données précédent, à laquelle l'entrée des informations de transaction dans le bloc de données cible est liée;
déterminer que le résultat de vérification indique que la vérification n'a pas réussi dans un cas où le mot d'état d'occupation indique un état occupé; et

déterminer que le résultat de vérification indique que la vérification a réussi dans un cas où le mot d'état d'occupation indique un état inoccupé; et

après la transmission du bloc de données cible à d'autres noeuds comptables dans le groupe de noeuds comptables pour réaliser un consensus, et l'enregistrement du bloc de données cible sur la branche de chaîne de blocs sélectionnée, le procédé comprend en outre:

définir un mot d'état d'occupation correspondant à la sortie des informations de transaction dans le bloc de données cible pour indiquer un état inoccupé; et
définir le mot d'état d'occupation correspondant à la sortie des informations de transaction dans le bloc de données précédent, à laquelle l'entrée des informations de transaction dans le bloc de données cible est liée pour indiquer un état occupé.

10. Procédé selon la revendication 6, dans lequel l'enregistrement d'un résumé d'un bloc de données précédent qui est enregistré sur la branche de chaîne de blocs sélectionnée, dans un en-tête de bloc du bloc de données cible comprend:

enregistrer le résumé du bloc de données précédent qui est enregistré sur la branche de chaîne de blocs sélectionnée et une signature formée en chiffrant le résumé en utilisant une clé privée spécifique au noeud comptable leader, dans l'en-tête de bloc du bloc de données cible; et
le résultat de vérification pour le bloc de données cible de chacun des autres noeuds comptables est généré de la manière suivante:

déchiffrer la signature en utilisant une clé publique spécifique au noeud comptable leader;
comparer un résultat du déchiffrement au résumé dans l'en-tête de bloc;
déterminer que le résultat de vérification indique que la vérification a réussi dans un cas où le résultat du déchiffrement est identique au résumé dans l'en-tête de bloc; et
déterminer que le résultat de vérification indique que la vérification n'a pas réussi dans un cas où le résultat du déchiffrement est différent du résumé dans l'en-tête de bloc.

11. Procédé selon la revendication 1, dans lequel les informations de transaction dans le bloc de données cible sont chiffrées par un noeud générateur des informations de transaction en utilisant une clé privée spécifique au noeud générateur pour former une signature, et la signature est enregistrée dans le bloc de données cible conjointement avec les informations de transaction; et
un résultat de vérification pour le bloc de données cible de chacun des autres noeuds comptables est généré de la manière suivante:

déchiffrer une signature de chaque pièce des informations de transaction dans le bloc de données cible en utilisant une clé publique spécifique au noeud générateur;
acquérir un résumé pour chaque pièce des informations de transaction dans le bloc de données cible; et
comparer un résultat du déchiffrement à un résumé de l'information de transaction correspondante dans le bloc de données cible;
déterminer que le résultat de vérification indique que la vérification a réussi dans un cas où le résultat du déchiffrement pour chaque pièce des informations de transaction est identique au résumé de l'information de transaction correspondante; et
déterminer que le résultat de vérification indique que la vérification n'a pas réussi dans un cas où le résultat du déchiffrement pour chaque pièce des informations de transaction est différent du résumé de l'information de transaction correspondante.

12. Procédé selon la revendication 1, dans lequel la pluralité de branches de chaîne de blocs sont agencées dans une matrice à M dimensions, M est un entier positif supérieur à 1, un identificateur de chacune des branches de chaîne de blocs est indiqué par un vecteur d'un de M éléments, et chacun des M éléments représente un numéro de séquence d'une branche de chaîne de blocs correspondante dans une dimension correspondante.

13. Noeud comptable leader comprenant:

une mémoire qui est configurée pour stocker des instructions lisibles par ordinateur; et
un processeur qui est configuré pour lire les instructions lisibles par ordinateur et stockées dans la mémoire, pour mettre en oeuvre le procédé selon l'une quelconque des revendications 1 à 12.

14. Support de programme informatique comprenant des instructions lisibles par ordinateur qui y sont stockées, dans lequel les instructions lisibles par ordinateur, lorsqu'elles sont exécutées par un processeur d'un ordinateur, amènent l'ordinateur à mettre en oeuvre le procédé selon l'une quelconque des revendications 1 à 12.

15. Produit de programme informatique comprenant des instructions, dans lequel le produit de programme informatique, lorsqu'il est exécuté sur un ordinateur, amène l'ordinateur à mettre en oeuvre le procédé selon l'une quelconque des revendications 1 à 12.

FIG. 1A

FIG. 1B

FIG. 1C

102

To-be-uploaded electronic invoice transaction information has a
packaging size, whether to perform packaging

OK

FIG. 2A

102

A previous data block is recorded on a blockchain branch 1, and a
currently generated data block is to be recorded on a blockchain
branch 2

OK

FIG. 2B

102

An abstract of a previous data block on the blockchain branch 2 is recorded in a block header of the current data block, whether to send the data block to other accounting nodes for performing consensus

OK

FIG. 2C

102

The other accounting nodes perform the consensus successfully, whether to perform uploading

OK

FIG. 2D

102

Uploading is completed

OK

FIG. 2E

203    204

200

FIG. 3A

FIG. 3B

FIG. 4A

Block

301

Block header

302

305

Block body

306

Input | Output
Input | Output
Input | Output

301

Block header

nVersion

hashPrevBlock

hashMerkleRoot

nTime

nNonce

301

Block header

nVersion

hashPrevBlock

hashMerkleRoot

nTime

nNonce

nChainId

305

Input

nVersion

hashPrevTx

NPreOutIndex

nScriptLength

bScript

305

Input

nVersion

nPreOutChainId

hashPrevTx

NPreOutIndex

nScriptLength

bScript

300

FIG. 4B

FIG. 5A

FIG. 5B

| Transaction information generator node | Leader accounting node | Accounting node | Accounting node | Accounting node |
|---|---|---|---|---|

Initiate a transaction

Broadcast a block

Broadcast a block

Broadcast a block

Verification succeeds

Verification succeeds

Verification succeeds

Verification succeeds

Verification succeeds

Verification succeeds

Verification succeeds

Verification succeeds

Verification succeeds

Submit the block

Submit the block

Submit the block

Submission succeeds

Submission succeeds

Submission succeeds

Submission succeeds

Submission succeeds

Submission succeeds

Submission succeeds

Submission succeeds

Uploading is completed

FIG. 6

FIG. 7

FIG. 8

410

Generate a target data block

420

Determine, in multiple blockchain branches, whether there is a blockchain branch having a data block on which no consensus is being performed and which is to be uploaded

430

In a case that there are branch blockchains each having no data block on which no consensus is being performed and which is to be uploaded, select, from the branch blockchains each having no data block on which no consensus is being performed and which is to be uploaded, a blockchain branch for recording the target data block

440

Record an abstract of a previous data block that is recorded on the selected blockchain branch into a block header of the target data block

450

Transmit the target data block to other accounting nodes in the group of accounting nodes for consensus, and record the target data block on the selected blockchain branch

FIG. 9

4301

Determine the number of data blocks recorded on each of the blockchain branches each having no data block on which consensus is being performed and which is to be uploaded

4302

Determine a time difference between a current time and a recording time of a last data block on each of the blockchain branches each having no data block on which consensus is being performed and which is to be uploaded

4303

Select, based on the number of the recorded data blocks and the time difference and from the branch blockchains each having no data block on which consensus is being performed and which is to be uploaded, the branch blockchain for recording the target data block

FIG. 10

43031

Determine a first score for the number of recorded data blocks on each of the branch blockchains each having no data block on which consensus is being performed and which is to be uploaded

43032

Determine a second score for the time difference of each of the branch blockchains each having no data block on which consensus is being performed and which is to be uploaded

43033

Determine, based on a weighted sum of the first score and the second score, the branch blockchain for recording the target data block

FIG. 11

4501

Transmit the target data block to the other accounting nodes in the group of accounting nodes

4502

Receive a verification result for the target data block from each of the other accounting nodes

4503

Record the target data block on the selected branch blockchain, and notify the other accounting nodes in the group of accounting nodes if it is determined that the verification succeeds based on the verification result

FIG. 12

610

Decrypt a signature of each piece of transaction information in the target data block by using a public key specific to the generator node

620

Acquire an abstract of each piece of transaction information in the target data block

630

Compare a result of the decryption with an abstract of corresponding transaction information in the target data block, and determine that the verification result indicates that the verification is passed in a case that the result of the decryption for each piece of transaction information is the same as the abstract of the corresponding transaction information; otherwise, the verification result indicates that the verification is not passed

FIG. 13

710

Obtain a current processing load of each accounting node in the group of accounting nodes

720

Determine a leader accounting node based on the current processing load

FIG. 14

910

Target data block generating module

920

Determining module

930

First blockchain branch selecting module

940

Abstract recording module

950

Consensus and uploading module

FIG. 15

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910130823

**Non-patent literature cited in the description**

- Performance Modeling of PBFT Consensus Process for Permissioned Blockchain Network (Hyperledger Fabric). **SUKHWANI HARISH et al.** 2017 IEEE 36TH SYMPOSIUM; ON RELIABLE DISTRIBUTED SYSTEMS (SRDS). IEEE, 26 September 2017, 253-255